# EUROPÄISCHE PATENTANMELDUNG

(11) **EP 4 831 512 A1**
(43) Veröffentlichungstag der Anmeldung: **28.10.2026**
(21) Anmeldenummer: 25171575.1
(22) Anmeldetag: 22.04.2025
(51) Int. Cl.: F16H 3/00, F16H 3/72, F16H 37/04

(54) **ANTRIEBSANORDNUNG UND ARBEITSMASCHINE**

(71) Anmelder: Deere & Company, Moline, IL 61265 (US)
(72) Erfinder: LANG, MATTHIAS, 68163 Mannheim (DE); GUGEL, RAINER, 69163 Mannheim (DE); MUELLER, DAVID, 69163 Mannheim (DE); RAISCH, STEFAN, 68163 Mannheim (DE)
(74) Vertreter: Stein, Stefan

(57) **Zusammenfassung**

Die Erfindung betrifft eine Antriebsanordnung (20) für eine Arbeitsmaschine (10), umfassend: eine Getriebeeinrichtung (50) mit einer ersten und zweiten Eingangsseite (80, 82) und einer ersten und zweiten Ausgangsseite (84, 96), und ein Doppelkupplungsgetriebe (52), wobei mindestens ein Gang als Windungsgang ausgeführt ist, und das Doppelkupplungsgetriebe (52) mit der Getriebeeinrichtung (50) verbindbar oder verbunden ist, und eine Eingangswelle (86), und eine Ausgangswelle (88), und eine erste Energiemaschine (54), wobei die erste Energiemaschine (54) mit der Eingangswelle (86) verbindbar oder verbunden ist, und eine zweite Energiemaschine (56), wobei die zweite Energiemaschine (56) mit der zweiten Eingangsseite (82) verbunden ist. Eine Drehzahl und/oder eine Drehrichtung der Getriebeeinrichtung (50) ist einstellbar und/oder verstellbar und/oder ansteuerbar. Die Erfindung betrifft weiter eine Arbeitsmaschine (10).

## Beschreibung

Die Erfindung betrifft eine Antriebsanordnung gemäss dem Oberbegriff des unabhängigen Anspruchs 1 und eine Arbeitsmaschine gemäss dem Oberbegriff des unabhängigen Anspruchs 13. Seit langem kommen in Arbeitsmaschinen Antriebsanordnungen zum Einsatz, um den Vortrieb der Arbeitsmaschine auch unter hoher Zuglast, beispielsweise verursacht durch ein daran angebautes Arbeitsgerät wie ein Bodenbearbeitungsgerät (z.B. Pflug) oder dergleichen, über eine bloße Veränderung der Antriebsmotordrehzahl hinaus unterbrechungsfrei verändern zu können. Die Antriebsanordnung kann dabei insbesondere eine unter Last schaltbare Antriebsanordnung sein. Eine bekannte Maßnahme ist es, die Anzahl Gangstufen einer Antriebsanordnung zu erhöhen, indem diese eine Kombination von Getrieben umfasst, beispielsweise durch Kombination einer Getriebeeinrichtung mit einem Doppelkupplungsgetriebe. Die DE 10 2013 110 709 A1 offenbart eine solche Antriebsanordnung. Das dabei verwendete Doppelkupplungsgetriebe wiederum kann aus der WO 2009/050078 A2 bekannt sein. Nachteilig an den bekannten Antriebsanordnungen ist, dass der benötigte Einbauraum zu gross ist. Darüber hinaus haben sich in den letzten Jahren auch Arbeitsmaschinen, insbesondere im Bereich der landwirtschaftlichen Zugfahrzeuge, mit Antriebsanordnungen etabliert, die als Stufenlosgetriebe ausgebildet sind. Stufenlosgetriebe werden üblicherweise leistungsverzweigt mit einem hydraulisch variablen Pfad ausgeführt. Um Stufenlosgetriebe mit komfortablen von der fahrzeugführenden Person nicht oder kaum wahrnehmbaren Schaltvorgängen zu konstruieren, ist es hierbei nötig, zwei Variatorausgänge vorzusehen, die im Synchronpunkt umgeschaltet werden. Nachteilhafterweise führt dies zu einer hohen Komplexität in der Antriebsanordnung.

Ausgehend von diesem Stand der Technik ist es eine Aufgabe der vorliegenden Erfindung eine gegenüber dem Stand der Technik verbesserte Antriebsanordnung und eine Arbeitsmaschine vorzuschlagen. Im Speziellen ist es eine Aufgabe der vorliegenden Erfindung eine Antriebsanordnung und eine Arbeitsmaschine vorzuschlagen, die konstruktiv einfacher und/oder kompakter ausgestaltet sind und/oder weniger Bauraum benötigen und/oder weniger Komplexität aufweisen.

Diese Aufgabe wird durch eine Antriebsanordnung mit den Merkmalen des Anspruchs 1 und eine Arbeitsmaschine mit den Merkmalen des Anspruchs 13 gelöst. Die abhängigen Ansprüche beziehen sich auf besonders vorteilhafte Ausführungsformen der Erfindung.

Erfindungsgemäss wird eine Antriebsanordnung für eine Arbeitsmaschine vorgeschlagen, bevorzugt ein Stufenlosgetriebe mit einem elektrischen variablen Pfad, insbesondere als eingangsgekoppelte Struktur, für eine Arbeitsmaschine.

Die Antriebsanordnung umfasst:
- eine Getriebeeinrichtung mit einer ersten und zweiten Eingangsseite und einer ersten und zweiten Ausgangsseite, insbesondere mit einem ersten und zweiten Eingang und einem ersten und zweiten Ausgang,
- und ein Doppelkupplungsgetriebe, insbesondere mit mehr als einer Stufe, wobei mindestens ein Gang als Windungsgang ausgeführt ist, und das Doppelkupplungsgetriebe, insbesondere eingangsseitig, mit der Getriebeeinrichtung verbindbar oder verbunden ist,
- und eine Eingangswelle, wobei insbesondere die erste Eingangsseite mit der Eingangswelle verbindbar oder verbunden sein kann,
- und eine Ausgangswelle,
- und eine erste Energiemaschine, wobei die erste Energiemaschine mit der Eingangswelle verbindbar oder verbunden ist,
- und eine zweite Energiemaschine, wobei die zweite Energiemaschine mit der zweiten Eingangsseite verbindbar oder verbunden ist.

Eine Drehzahl und/oder eine Drehrichtung, und/oder insbesondere eine Rotation, der Getriebeeinrichtung ist einstellbar und/oder verstellbar und/oder ansteuerbar, bevorzugt ist eine Drehzahl und/oder eine Drehrichtung, und/oder insbesondere eine Rotation, der ersten und/oder zweiten Ausgangsseite, bevorzugt der ersten oder zweiten Ausgangsseite, der Getriebeeinrichtung mit der zweiten Energiemaschine einstellbar und/oder verstellbar und/oder ansteuerbar. Mit anderen Worten, eine Drehzahl und/oder eine Drehrichtung, und/oder insbesondere eine Rotation, der zweiten Energiemaschine kann, insbesondere derart, einstellbar und/oder verstellbar und/oder ansteuerbar sein, dass eine Drehzahl und/oder eine Drehrichtung, und/oder insbesondere eine Rotation, der ersten und/oder zweiten Ausgangsseite, bevorzugt der ersten oder zweiten Ausgangsseite, der Getriebeeinrichtung einstellbar und/oder verstellbar und/oder ansteuerbar ist. Alternativ oder zusätzlich kann die Antriebsanordnung und/oder die Arbeitsmaschine eine Steuereinheit umfassen. Die Steuereinheit kann konfiguriert sein, eine Drehzahl und/oder eine Drehrichtung, und/oder insbesondere eine Rotation, der ersten und/oder zweiten Ausgangsseite, bevorzugt der ersten oder zweiten Ausgangsseite, der Getriebeeinrichtung einzustellen und/oder zu verstellen und/oder anzusteuern, bevorzugt eine Drehzahl und/oder eine Drehrichtung, und/oder insbesondere eine Rotation, der ersten und/oder zweiten Ausgangsseite, insbesondere der ersten oder zweiten Ausgangsseite, der Getriebeeinrichtung mit der zweiten Energiemaschine einzustellen und/oder zu verstellen und/oder anzusteuern. Im Speziellen kann die Steuereinheit konfiguriert sein, eine Drehzahl und/oder eine Drehrichtung, und/oder insbesondere eine Rotation, der zweiten Energiemaschine einzustellen und/oder zu verstellen und/oder anzusteuern, um eine Drehzahl und/oder eine Drehrichtung, und/oder insbesondere eine Rotation, der ersten und/oder zweiten Ausgangsseite, bevorzugt der ersten oder zweiten Ausgangsseite, der Getriebeeinrichtung einzustellen und/oder zu verstellen und/oder anzusteuern.

Unter verbunden kann bevorzugt mechanisch verbunden und/oder mechanisch wirkverbunden und/oder drehfest verbunden verstanden werden. Im Speziellen kann unter verbunden zusätzlich oder alternativ antreibbar verbunden, also drehmoment- und/oder drehzahlübertragend, und/oder gekoppelt, also insbesondere mechanisch gekoppelt und/oder starr gekoppelt, und/oder drehfest gekoppelt verstanden werden. Unter verbindbar kann bevorzugt mechanisch verbindbar und/oder mechanisch wirkverbindbar und/oder drehfest verbindbar verstanden werden. Im Speziellen kann unter verbindbar zusätzlich oder alternativ antreibbar verbindbar, also drehmoment- und/oder drehzahlübertragend, und/oder koppelbar, also mechanisch koppelbar und/oder starr koppelbar, und/oder drehfest verbindbar verstanden werden. Unter verbunden kann im Speziellen also eine Verbindung von zwei Komponenten verstanden werden, die es ermöglicht, eine Energie und/oder Kraft und/oder ein Drehmoment und/oder eine Drehzahl von der einen Komponente auf die andere Komponente zu übertragen, insbesondere auf mechanischem Weg zu übertragen. Zwischen den zwei Komponenten können dabei weitere Komponenten oder Bauteile vorgesehen sein, die solch eine Energie- und/oder Kraft- und/oder Drehmomentübertragung und/oder Übertragung einer Drehzahl zwischen den zwei Komponenten ermöglichen.

Die erste und/oder zweite Energiemaschine kann in Vorgelegebauweise oder in Inline-Bauweise realisiert sein, insbesondere in Vorgelegebauweise oder in Inline-Bauweise in der Antriebsanordnung angeordnet sein. Die erste und/oder zweite Energiemaschine können als Elektromotoren, insbesondere als ein erster und zweiter Elektromotor ausgebildet sein. Alternativ oder zusätzlich können die erste und/oder zweite Energiemaschine als Brennstoffzelle, insbesondere als eine erste und zweite Brennstoffzelle ausgebildet sein oder diese umfassen. Die erste und/oder zweite Energiemaschine können aber auch eine mit Gleichstrom und/oder Drehstrom betriebene Synchron- und/oder Asynchronmaschine mit permanenter und/oder elektrischer Erregung, besonders bevorzugt eine permanenterregte Drehstrom-Synchronmaschine sein. Die erste und zweite Energiemaschine können motorisch und/oder generatorisch betreibbar sein. Die erste und zweite Energiemaschine können die Antriebsanordnung mit einer Drehzahl und/oder einer Kraft und/oder einem Drehmoment antreiben. Die erste Energiemaschine, insbesondere der erste Elektromotor, kann eine erste Antriebswelle umfassen. Die zweite Energiemaschine, insbesondere der zweite Elektromotor, kann ein zweite Antriebswelle umfassen. Die erste und zweite Energiemaschine können in jedem Betriebspunkt die eine motorisch und die andere generatorisch betreibbar sein. Die Steuereinheit kann konfiguriert sein, die erste und zweite Energiemaschine in jedem Betriebspunkt die eine motorisch und die andere generatorisch zu betreiben. Die Steuereinheit kann konfiguriert sein, die erste und zweite Energiemaschine in jedem Betriebspunkt, insbesondere derart, einzustellen und/oder zu verstellen und/oder anzusteuern, dass die eine motorisch und die andere generatorisch betrieben wird.

Die erste Energiemaschine kann abtriebsseitig mit der Eingangswelle verbunden sein. Dazu kann beispielsweise ein Rotor der ersten Energiemaschine, insbesondere ein innenliegender Rotor, mit der Eingangswelle verbunden sein. Die erste Energiemaschine kann als Drehmoment- oder Torquemotor ausgeführt sein. Die erste Energiemaschine treibt bei dieser Ausführungsform die Eingangswelle direkt an. Ebenso kann die erste Energiemaschine aber auch direkt oder über eine oder mit einer ersten oder durch eine erste Übersetzungsstufe, insbesondere eine Stirnradstufe oder ein Zahnradpaar oder einen Planetensatz, oder ein Getriebe und/oder eine weitere Welle mit der Eingangswelle verbunden sein. Die erste Energiemaschine kann also mit festem Übersetzungsverhältnis oder mit einem variablen Übersetzungsverhältnis mit der Eingangswelle verbunden sein. Die erste Energiemaschine kann auch als Generator ausgebildet sein, und insbesondere in einem Rekuperationsbetrieb einen Energiespeicher aufladen.

Die zweite Energiemaschine kann abtriebsseitig mit der zweiten Eingangsseite der Getriebeeinrichtung verbunden sein. Dazu kann beispielsweise ein Rotor der zweiten Energiemaschine, insbesondere ein innenliegender Rotor, mit der zweiten Eingangsseite verbunden sein. Die zweite Energiemaschine kann als Drehmoment- oder Torquemotor ausgeführt sein. Ebenso kann die zweite Energiemaschine aber auch direkt oder über eine oder mit einer zweiten oder durch eine zweite Übersetzungsstufe, insbesondere eine Stirnradstufe oder ein Zahnradpaar oder einen Planetensatz, oder ein Getriebe und/oder eine weitere Welle mit der zweiten Eingangsseite verbunden sein. Die zweite Energiemaschine kann also mit festem Übersetzungsverhältnis oder mit einem variablen Übersetzungsverhältnis, beispielsweise über das Getriebe, mit der zweiten Eingangsseite verbunden sein. Die zweite Energiemaschine kann auch als Generator ausgebildet sein, und insbesondere in einem Rekuperationsbetrieb den Energiespeicher aufladen.

Die Antriebsanordnung, insbesondere die Arbeitsmaschine, kann einen oder mehrere Energiespeicher umfassen. Der Energiespeicher kann mit der ersten und/oder zweiten Energiemaschine elektrisch verbunden und/oder elektrisch koppelbar sein. Der Energiespeicher kann ein elektrischer Energiespeicher sein. Der Energiespeicher kann die erste und/oder zweite Energiemaschinen mit Energie, insbesondere elektrischer Energie, und/oder Leistung, insbesondere elektrischer Leistung versorgen. Der Energiespeicher kann von der ersten und/oder zweiten Energiemaschinen aufgeladen, insbesondere mit Energie, bevorzugt elektrischer Energie, und/oder Leistung, bevorzugt elektrischer Leistung versorgt werden. Der Energiespeicher kann als eine Batterie und/oder ein Akku und/oder eine Superkondensator und/oder eine Brennstoffzelle und/oder eine sonstige Vorrichtung zur Speicherung von elektrischer Energie ausgebildet sein.

Eine Eingangsseite, insbesondere die erste und/oder zweite Eingangsseite, kann eine mechanische Schnittstelle sein, mit welcher eine Kraft und/oder ein Drehmoment und/oder eine Drehzahl in die Antriebsordnung, insbesondere die Getriebeeinrichtung und/oder das Doppelkupplungsgetriebe, eingeleitet werden kann. Eine Ausgangsseite, insbesondere die erste und/oder zweite Ausgangsseite und/oder die Ausgangswelle, kann eine mechanische Schnittstelle sein, mit welcher eine Kraft und/oder ein Drehmoment und/oder eine Drehzahl aus der Antriebsordnung, insbesondere der Getriebeeinrichtung und/oder das Doppelkupplungsgetriebe, ausgeleitet werden kann.

Das Doppelkupplungsgetriebe kann ein erstes Schaltelement, insbesondere eine erste Kupplung, und ein zweites Schaltelement, insbesondere eine zweite Kupplung umfassen. Die Eingangsseite oder die Eingangsseiten des ersten und/oder zweiten Schaltelements, bevorzugt der ersten und zweiten Kupplung, kann eine dritte Eingangsseite sein. Die dritte Eingangsseite des Doppelkupplungsgetriebes kann, insbesondere direkt oder indirekt, mit der ersten und/oder zweiten Ausgangsseite der Getriebeeinrichtung verbindbar oder verbunden sein. Das erste Schaltelement, insbesondere die erste Kupplung, kann mit einer ersten Getriebeeingangswelle des Doppelkupplungsgetriebes und das zweite Schaltelement, insbesondere die zweite Kupplung, kann mit einer zweiten Getriebeeingangswelle des Doppelkupplungsgetriebes verbindbar oder verbunden sein. Das Doppelkupplungsgetriebe kann der Getriebeeinrichtung im Leistungsfluss nachgelagert sein. Im Speziellen können die erste und/oder zweite Ausgangsseite über das oder durch das erste Schaltelement mit der ersten Getriebeeingangswelle und/oder über das oder durch das zweite Schaltelement mit der zweiten Getriebeeingangswelle verbindbar oder verbunden sein. Das erste und/oder zweite Schaltelement, insbesondere die erste und/oder zweite Kupplung, und/oder die erste und/oder zweiten Getriebeeingangswelle können achsparallel und/oder koaxial zueinander angeordnet sein.

Das erste Schaltelement, insbesondere die erste Kupplung, kann zwischen einem geöffneten Zustand, in dem keine Drehzahl und/oder Drehmoment an die erste Getriebeeingangswelle übertragen wird, und einem geschlossenen Zustand beweglich und/oder schaltbar sein, in dem eine Drehzahl und/oder ein Drehmoment an die ersten Getriebeeingangswelle übertragen wird. Im Speziellen kann das erste Schaltelement, insbesondere die erste Kupplung, zwischen einem geöffneten Zustand, in dem die erste Ausgangsseite von der ersten Getriebeeingangswelle antriebsmäßig gelöst ist, und einem geschlossenen Zustand beweglich und/oder schaltbar sein, in dem die erste Ausgangsseite mit der ersten Getriebeeingangswelle in Antriebsverbindung steht, also verbunden ist. Das zweite Schaltelement, insbesondere die zweite Kupplung, kann zwischen einem geöffneten Zustand, in dem keine Drehzahl und/oder Drehmoment an die zweite Getriebeeingangswelle übertragen wird, und einem geschlossenen Zustand beweglich und/oder schaltbar sein, in dem eine Drehzahl und/oder ein Drehmoment an die zweite Getriebeeingangswelle übertragen wird. Im Speziellen kann das zweite Schaltelement, insbesondere die zweite Kupplung, zwischen einem geöffneten Zustand, in dem die erste Ausgangsseite von der zweite Getriebeeingangswelle antriebsmäßig gelöst ist, und einem geschlossenen Zustand beweglich und/oder schaltbar sein, in dem die erste Ausgangsseite mit der zweite Getriebeeingangswelle in Antriebsverbindung steht, also verbunden ist.

Die erste und/oder zweite Getriebeeingangswelle können über eine Mehrzahl von Stirnradstufen des Doppelkupplungsgetriebes mit der Ausgangswelle, insbesondere des Doppelkupplungsgetriebes, verbindbar oder verbunden sein. Mit anderen Worten, das Doppelkupplungsgetriebe kann eine oder mehrere Stirnradstufen, insbesondere eine Mehrzahl an Stirnradstufen, umfassen. Die erste und/oder zweite Getriebeeingangswelle können über die eine oder mehrere oder durch die eine oder mehrere der Stirnradstufen mit der Ausgangswelle verbindbar oder verbunden sein, insbesondere zur Einrichtung von Gangstufen. Eine Stirnradstufen kann ein drehfest auf der ersten oder zweiten Getriebeeingangswelle angeordnetes Festrad und ein auf der der Ausgangswelle drehbar angeordnetes Schaltrad umfassen. Alternativ kann eine Stirnradstufe ein drehfest auf der Ausgangswelle angeordnetes Festrad und ein auf der ersten oder zweiten Getriebeeingangswelle drehbar angeordnetes Schaltrad umfassen.

Die erste Eingangsseite kann ein erstes Antriebselement umfassen oder als ein erstes Antriebselement ausgebildet sein. Die zweite Eingangsseite kann ein zweites Antriebselement umfassen oder als ein zweites Antriebselement ausgebildet sein. Die erste und/oder zweite Eingangsseite, insbesondere das erste und/oder zweite Antriebselement, kann oder können beispielsweise als eine Welle ausgebildet sein und/oder diese umfassen. Die erste Ausgangsseite kann ein erstes Abtriebselement umfassen oder als ein erstes Abtriebselement ausgebildet sein. Die zweite Ausgangsseite kann ein zweites Abtriebselement umfassen oder als ein zweites Abtriebselement ausgebildet sein. Die erste Ausgangsseite, bevorzugt das erste Abtriebselement, kann beispielsweise als eine Welle ausgebildet sein und/oder diese umfassen. Die zweite Ausgangsseite, bevorzugt das zweite Abtriebselement, kann beispielsweise als eine Welle ausgebildet sein und/oder diese umfassen.

Die Antriebsanordnung kann ein Anfahrmodul zum elektrischen Anfahren umfassen. Das Anfahrmodul kann im Leistungsfluss zwischen der ersten Energiemaschine und der Getriebeeinrichtung angeordnet sein oder im Leistungsfluss zwischen der ersten Energiemaschine und einem Modul zur Drehrichtungsumkehr angeordnet sein oder im Leistungsfluss zwischen dem Modul zur Drehrichtungsumkehr und der Getriebeeinrichtung angeordnet sein oder im Leistungsfluss zwischen der ersten Energiemaschine und der Getriebeeinrichtung angeordnet sein. Das Anfahrmodul zum elektrischen Anfahren kann zur wahlweisen Kopplung und Entkopplung einer Antriebsverbindung zwischen
- der ersten Energiemaschine und der Getriebeeinrichtung, oder
- der ersten Energiemaschine und dem Modul zur Drehrichtungsumkehr, oder
- dem Modul zur Drehrichtungsumkehr und der Getriebeeinrichtung, oder
- der ersten Energiemaschine und der Getriebeeinrichtung,
ausgebildet sein. Das Anfahrmodul kann ein weiteres Schaltelement aufweisen, welches antriebs- und abtriebsseitig, beispielsweise über Wellen, mit den oben genannten Baugruppen verbindbar oder verbunden sein kann.

Die Schaltelemente, insbesondere das erste und/oder zweite und/oder ein drittes und/oder viertes Schaltelement und/oder die weiteren Schaltelemente und/oder eine Trennkupplung und/oder eine Kupplungseinrichtung, können mit der Steuereinheit signalverbunden und/oder wirkend gekoppelt und/oder signalübertragend und/oder datenleitend verbunden sein. Im Speziellen kann jedes Schaltelement ein Ventil oder eine Ventilanordnung, insbesondere ein Steuerventil, oder einen Aktuator zum Ansteuern und/oder Einstellen und/oder Verstellen des jeweiligen zugeordneten Schaltelements umfassen. Das Ventil oder die Ventilanordnung oder der Aktuator können mit dem jeweiligen zugeordneten Schaltelement verbunden und/oder wirkend gekoppelt sein. Die Steuereinheit kann mit dem Ventil oder der Ventilanordnung oder dem Aktuator des jeweiligen zugeordneten Schaltelements signalverbunden und/oder wirkend gekoppelt und/oder signalübertragend und/oder datenleitend verbunden sein. Die Steuereinheit kann konfiguriert sein, das Schaltelement, insbesondere über das oder mit dem jeweiligen zugeordneten Ventil oder der Ventilanordnung oder dem Aktuator, anzusteuern und/oder einzustellen und/oder zu verstellen. Die Steuereinheit kann konfiguriert sein, das Schaltelement, insbesondere über das oder mit dem jeweiligen zugeordneten Ventil oder die Ventilanordnung oder den Aktuator, in die erste Position, also den geöffneten Zustand, oder die zweite Position, also den geschlossenen Zustand, einzustellen und/oder zu verstellen, insbesondere auch von der ersten in die zweite Position zu bewegen und umgekehrt.

Unter dem Schaltelement, insbesondere das erste und/oder zweite und/oder ein drittes und/oder viertes Schaltelement und/oder den weiteren Schaltelemente und/oder die Trennkupplung und/oder Kupplungseinrichtung, kann ein Verbindungsteil verstanden werden, mittels dem wenigstens ein eine Energie und/oder Kraft und/oder ein Drehmoment und/oder eine Drehzahl übertragendes Teil mit einem weiteren eine Energie und/oder Kraft und/oder ein Drehmoment und/oder eine Drehzahl übertragenden Teil oder mit einem orts- oder gehäusefesten Teil antriebswirksam verbindbar ist. Das jeweilige Schaltelement ist zwischen zumindest einen geöffneten und einen geschlossenen Zustand schaltbar, wobei das Schaltelement im geöffneten Zustand weder eine Energie und/oder Kraft und/oder ein Drehmoment und/oder eine Drehzahl zwischen zwei mit dem Schaltelement zusammenwirkenden Teilen übertragen kann, und wobei das Schaltelement im geschlossenen Zustand eine Energie und/oder Kraft und/oder ein Drehmoment und/oder eine Drehzahl zwischen den zwei mit dem Schaltelement zusammenwirkenden Teilen übertragen kann. Sofern eine Verbindung, insbesondere eine Wirkverbindung, zwischen zwei Elementen oder Komponenten der Antriebsanordnung besteht, werden Energie und/oder Kraft und/oder ein Drehmoment und/oder eine Drehzahl von einem Element oder einer Komponente auf das andere Element oder die andere Komponente übertragen. Das Schaltelement, insbesondere das erste und/oder zweite und/oder ein drittes und/oder viertes Schaltelement und/oder weitere Schaltelemente und/oder die Trennkupplung und/oder Kupplungseinrichtung, kann eine Kupplung, insbesondere eine Lamellenkupplung, und/oder eine Bremse und/oder eine Synchronisierung und/oder eine Klauenkupplung sein. Im Speziellen können das erste und/oder zweite und/oder ein drittes und/oder viertes Schaltelement und/oder weitere Schaltelemente und/oder die Trennkupplung und/oder die Kupplungseinrichtung als Lamellenkupplungen (oder als trockene Einscheibenkupplungen), besonders bevorzugt als Reibkupplungen ausgebildet sein. Das erste und/oder zweite und/oder ein drittes und/oder viertes Schaltelement und/oder weitere Schaltelemente und/oder die Trennkupplung und/oder die Kupplungseinrichtung können aber auch als nicht-lastschaltbare Kupplungen ausgebildet sein.

Wesentlich für die Erfindung ist, dass eine Drehzahl und/oder eine Drehrichtung, und/oder insbesondere eine Rotation, der ersten und/oder zweiten Ausgangsseite der Getriebeeinrichtung einstellbar und/oder verstellbar und/oder ansteuerbar ist. Dadurch kann vorteilhafterweise ein batterieelektrischer Fahrbereich realisiert werden. Durch Kombination des Doppelkupplungsgetriebes mit der Getriebeeinrichtung, insbesondere einer elektrisch leistungsverzweigten Umlaufgetriebestufe als Teil eines Doppelvariators, mit zwei Ausgangsseiten kann die zu installierende Leistung der Energiemaschinen reduziert werden, sodass der benötigte Bauraum der Antriebsanordnung reduziert werden kann. Die Antriebsanordnung weist ausserdem deutlich mehr Gänge auf und stellt damit eine größere Getriebespreizung zur Verfügung. Darüber hinaus kann die Antriebsanordnung vorteilhafterweise als ein lastschaltbares nahtloses Stufenlosgetriebe mit elektrisch variablem Pfad realisiert werden, wobei der Gangwechsel bei Drehzahlgleichheit aller beteiligter Komponenten erfolgen kann (sogenannte echte nahtlose Schaltpunkte bzw. engl. seamless shifts).

In Ausgestaltung der Erfindung umfasst die Antriebsanordnung eine Antriebseinheit. Die Antriebseinheit ist mit der Eingangswelle verbunden. Die Eingangswelle kann mit der ersten Eingangsseite verbindbar oder verbunden sein. Die Antriebseinheit und/oder die erste Energiemaschine kann über die oder durch die Eingangswelle mit der ersten Eingangsseite der Getriebeeinrichtung verbindbar oder verbunden sein. Die Antriebseinheit kann als ein Verbrennungsmotor ausgebildet sein. Alternativ oder zusätzlich kann es sich bei der Antriebseinheit um einen Elektromotor handeln. Die erste Energiemaschine kann mit der Antriebseinheit in einem konstanten Drehzahlverhältnis stehen. Die zweite Energiemaschine kann mit der Antriebseinheit in einem konstanten Drehmomentverhältnis stehen.

Mit dieser Ausgestaltung der Antriebsanordnung kann eine Drehzahl und/oder eine Drehrichtung, und/oder insbesondere eine Rotation, der Antriebseinheit und/oder Eingangswelle in der oder mit der Getriebeeinrichtung derart überlagert werden, dass eine Drehzahl und/oder eine Drehrichtung, und/oder insbesondere eine Rotation, der ersten und/oder zweiten Ausgangsseite, bevorzugt der ersten oder zweiten Ausgangsseite, der Getriebeeinrichtung einstellbar und/oder verstellbar und/oder ansteuerbar ist, bevorzugt entgegengesetzt zur Drehzahl und/oder Drehrichtung, und/oder insbesondere Rotation, der Antriebseinheit und/oder Eingangswelle einstellbar und/oder verstellbar ist, besonders bevorzugt die Drehrichtung der ersten und/oder zweiten Ausgangsseite, insbesondere der ersten oder zweiten Ausgangsseite, entgegengesetzt zur Drehrichtung der Antriebseinheit und/oder Eingangswelle einstellbar und/oder verstellbar ist. Mit anderen Worten, die Drehzahl und/oder Drehrichtung, und/oder insbesondere Rotation, der Antriebseinheit und/oder Eingangswelle kann in der oder mit der Getriebeeinrichtung mit der Drehzahl und/oder Drehrichtung, und/oder insbesondere Rotation, der zweiten Energiemaschine, insbesondere derart, überlagert werden, dass eine Drehzahl und/oder eine Drehrichtung, und/oder insbesondere eine Rotation, der ersten und/oder zweiten Ausgangsseite, bevorzugt der ersten oder zweiten Ausgangsseite, der Getriebeeinrichtung einstellbar und/oder verstellbar und/oder ansteuerbar ist, bevorzugt entgegengesetzt zur Drehzahl und/oder Drehrichtung, und/oder insbesondere Rotation, der Antriebseinheit und/oder Eingangswelle einstellbar und/oder verstellbar ist, besonders bevorzugt die Drehrichtung der ersten und/oder zweiten Ausgangsseite, insbesondere der ersten oder zweiten Ausgangsseite, entgegengesetzt zur Drehrichtung der Antriebseinheit und/oder Eingangswelle einstellbar und/oder verstellbar ist. Im Speziellen kann die Drehzahl und/oder Drehrichtung, und/oder insbesondere Rotation, der zweiten Energiemaschine derart einstellbar und/oder verstellbar und/oder ansteuerbar sein und in der oder mit der Getriebeeinrichtung mit der Drehzahl und/oder Drehrichtung, und/oder insbesondere Rotation, der Antriebseinheit und/oder Eingangswelle derart überlagerbar sein, dass eine Drehzahl und/oder eine Drehrichtung, und/oder insbesondere eine Rotation, der ersten und/oder zweiten Ausgangsseite, bevorzugt der ersten oder zweiten Ausgangsseite, der Getriebeeinrichtung einstellbar und/oder verstellbar und/oder ansteuerbar ist, bevorzugt entgegengesetzt zur Drehzahl und/oder Drehrichtung, und/oder insbesondere Rotation, der Antriebseinheit und/oder Eingangswelle einstellbar und/oder verstellbar ist, besonders bevorzugt die Drehrichtung der ersten und/oder zweiten Ausgangsseite, insbesondere der ersten oder zweiten Ausgangsseite, entgegengesetzt zur Drehrichtung der Antriebseinheit und/oder Eingangswelle einstellbar und/oder verstellbar ist. Dadurch kann ein Rückwärtsbetrieb der Antriebsanordnung und/oder eine Rückwärtsfahrt der Arbeitsmaschine ermöglicht werden. Alternativ oder zusätzlich kann die Steuereinheit konfiguriert sein, eine Drehzahl und/oder eine Drehrichtung, und/oder insbesondere eine Rotation, der Antriebseinheit und/oder Eingangswelle in der oder mit der Getriebeeinrichtung zu überlagern, und eine Drehzahl und/oder eine Drehrichtung, und/oder insbesondere eine Rotation, der ersten und/oder zweiten Ausgangsseite, bevorzugt der ersten oder zweiten Ausgangsseite, der Getriebeeinrichtung einzustellen und/oder zu verstellen und/oder anzusteuern, bevorzugt entgegengesetzt zur Drehzahl und/oder Drehrichtung, und/oder insbesondere Rotation, der Antriebseinheit und/oder Eingangswelle einzustellen und/oder zu verstellen, besonders bevorzugt die Drehrichtung der ersten und/oder zweiten Ausgangsseite, insbesondere der ersten oder zweiten Ausgangsseite, entgegengesetzt zur Drehrichtung der Antriebseinheit und/oder Eingangswelle einzustellen und/oder zu verstellen. Mit anderen Worten, alternativ oder zusätzlich kann die Steuereinheit konfiguriert sein, die Drehzahl und/oder Drehrichtung, und/oder insbesondere Rotation, der Antriebseinheit und/oder Eingangswelle in der oder mit der Getriebeeinrichtung mit der Drehzahl und/oder Drehrichtung, und/oder insbesondere Rotation, der zweiten Energiemaschine zu überlagern, und eine Drehzahl und/oder eine Drehrichtung, und/oder insbesondere eine Rotation, der ersten und/oder zweiten Ausgangsseite, bevorzugt der ersten oder zweiten Ausgangsseite, der Getriebeeinrichtung einzustellen und/oder zu verstellen und/oder anzusteuern, bevorzugt entgegengesetzt zur Drehzahl und/oder Drehrichtung, und/oder insbesondere Rotation, der Antriebseinheit und/oder Eingangswelle einzustellen und/oder zu verstellen, besonders bevorzugt die Drehrichtung der ersten und/oder zweiten Ausgangsseite, insbesondere der ersten oder zweiten Ausgangsseite, entgegengesetzt zur Drehrichtung der Antriebseinheit und/oder Eingangswelle einzustellen und/oder zu verstellen. Im Speziellen kann alternativ oder zusätzlich die Steuereinheit konfiguriert sein, die Drehzahl und/oder Drehrichtung, und/oder insbesondere Rotation, der zweiten Energiemaschine einzustellen und/oder zu verstellen und/oder anzusteuern und die Drehzahl und/oder Drehrichtung, und/oder insbesondere Rotation, der zweiten Energiemaschine in der oder mit der Getriebeeinrichtung mit der Drehzahl und/oder Drehrichtung, und/oder insbesondere Rotation, der Antriebseinheit und/oder Eingangswelle zu überlagern, um eine Drehzahl und/oder eine Drehrichtung, und/oder insbesondere eine Rotation, der ersten und/oder zweiten Ausgangsseite, bevorzugt der ersten oder zweiten Ausgangsseite, der Getriebeeinrichtung einzustellen und/oder zu verstellen und/oder anzusteuern, bevorzugt entgegengesetzt zur Drehzahl und/oder Drehrichtung, und/oder insbesondere Rotation, der Antriebseinheit und/oder Eingangswelle einzustellen und/oder zu verstellen, besonders bevorzugt die Drehrichtung der ersten und/oder zweiten Ausgangsseite, insbesondere der ersten oder zweiten Ausgangsseite, entgegengesetzt zur Drehrichtung der Antriebseinheit und/oder Eingangswelle einzustellen und/oder zu verstellen. Dadurch kann ein Rückwärtsbetrieb der Antriebsanordnung und/oder eine Rückwärtsfahrt der Arbeitsmaschine ermöglicht werden.

Wesentlich ist, dass durch Kombination der Antriebseinheit mit der Getriebeeinrichtung und dem Doppelkupplungsgetriebe eine Einstellung und/oder Verstellung, und/oder insbesondere eine Umkehrung, der Drehrichtung der ersten und/oder zweiten Ausgangsseite der Getriebeeinrichtung realisiert werden kann. Somit kann die Antriebsanordnung als ein lastschaltbares Stufenlosgetriebe mit elektrisch variablem Pfad realisiert werden. Vorteilhafterweise kann die zu installierende Leistung der ersten und zweiten Energiemaschinen reduziert werden. Ausserdem kann der benötigte Bauraum reduziert werden. Vorteilhafterweise kann dadurch ein konstruktiv einfacher und kompakter Aufbau der Antriebsanordnung realisiert werden. Vorteilhafterweise kann die Antriebsanordnung, insbesondere auch die Arbeitsmaschine, dadurch hybrid antreibbar sein.

In Ausgestaltung der Erfindung umfasst das Doppelkupplungsgetriebe das erste und zweite Schaltelement, wobei das erste Schaltelement mit der ersten Getriebeeingangswelle verbunden ist und das zweite Schaltelement mit der zweiten Getriebeeingangswelle verbunden ist. Das Doppelkupplungsgetriebe kann eine oder mehrere Stirnradstufen mit jeweils einem drehfest auf der ersten oder zweiten Getriebeeingangswelle angeordneten Festrad und jeweils einem auf der der Ausgangswelle drehbar angeordneten Schaltrad und/oder eine oder mehrere Stirnradstufen mit jeweils einem drehfest auf der Ausgangswelle angeordneten Festrad und jeweils einem auf der ersten oder zweiten Getriebeeingangswelle drehbar angeordnetes Schaltrad umfassen. Die Schalträder, beispielsweise Zahnräder oder Gangzahnräder, können auf der Ausgangswelle und/oder der ersten und/oder zweiten Getriebeeingangswelle angeordnet und/oder gelagert, insbesondere drehbar angeordnet und/oder drehbar gelagert sein. Auf der ersten und/oder zweiten Getriebeeingangswelle und/oder der Ausgangswelle können Festräder, beispielsweise Zahnräder, angeordnet, insbesondere drehfest angeordnet, und/oder mit der Ausgangswelle verbunden sein. Die Festräder können mit den Schalträdern in Eingriff stehen.

Die Antriebsanordnung, insbesondere das Doppelkupplungsgetriebe, kann eine Mehrzahl von Stirnradstufen, insbesondere mindestens zwei, vier, bevorzugt genau vier, oder mehrere Stirnradstufen, zur Einrichtung von Gangstufen, insbesondere Gruppengangstufen aufweisen. Im Speziellen können eine erste Stirnradstufe und eine zweite Stirnradstufe jeweils das Festrad an der ersten Getriebeeingangswelle und jeweils das Schaltrad an der Ausgangswelle aufweisen. Eine dritte Stirnradstufe und eine vierte Stirnradstufe können jeweils das Festrad an der zweiten Getriebeeingangswelle und jeweils das Schaltrad an der Ausgangswelle aufweisen. Darüber hinaus kann das Doppelkupplungsgetriebe eines oder mehrere Koppelelemente zum Koppeln zweier Schalträder umfassen, wobei insbesondere das oder die Koppelelemente drehbar auf der Ausgangswelle gelagert sein kann bzw. nicht drehfest mit der Ausgangswelle verbunden sein kann. Das Schaltrad der zweiten Stirnradstufe und das Schaltrad der dritten Stirnradstufe können dabei mit einem ersten Koppelelement derart koppelbar, bevorzugt derart selektiv koppelbar, dass über die zweite und dritte Stirnradstufe wenigstens eine Windungsgangstufe ausbildbar ist. Das Schaltrad der zweiten Stirnradstufe und das Schaltrad der dritten Stirnradstufe können dabei insbesondere in Verbindung mit der ersten oder vierten Stirnradstufe koppelbar sein, also insbesondere, wenn auch die erste oder vierte Stirnradstufe durch weitere Koppelelemente an der Ausgangswelle festgestellt oder drehfest gekoppelt sind. Mit anderen Worten, das Schaltrad der zweiten Stirnradstufe und das Schaltrad der dritten Stirnradstufe und das erste Koppelelement können derart auf der Ausgangswelle angeordnet sein, und insbesondere mittels des ersten Koppelelements das Schaltrad der zweiten Stirnradstufe und das Schaltrad der dritten Stirnradstufe derart verbindbar und lösbar sein, dass zumindest eine Windungsgangstufe über das erste Koppelelement schaltbar ist. Der Leistungsfluss der Windungsgangstufe kann sich dabei über mindestens drei Stirnradstufen mit miteinander kämmenden Festrädern und Schalträdern winden. Die höchste Gangstufe und die niedrigste Gangstufe können als Windungsgangstufe realisiert sein. Das Doppelkupplungsgetriebe kann bevorzugt genau nur sechs Gangstufen, besonders bevorzugt genau nur sechs lastschaltbare Gangstufen umfassen. Abtriebsseitig kann dem Doppelkupplungsgetriebe die Ausgangswelle zugeordnet sein. Das Doppelkupplungsgetriebe kann eingangsseitig mit der ersten Ausgangsseite, insbesondere dem ersten Hohlrad oder dem ersten Planetenträger oder einer Sonne, insbesondere der dritten Sonne, des zweiten Planetengetriebes verbunden sein, beispielsweise über eine Welle. Die erste und/oder zweite Getriebeeingangswelle können mit der Ausgangswelle in Antriebsverbindung gebracht werden. Die erste und/oder zweite Getriebeeingangswelle können als Hohlwellen ausgebildet sein. Die Eingangswelle kann als Vollwelle ausgebildet sein. Ausserdem können die Eingangswelle und/oder die erste und/oder zweite Getriebeeingangswelle zueinander koaxial und/oder ineinander, insbesondere frei drehbar ineinander, angeordnet sein. Im Speziellen kann die zweite Getriebeeingangswelle in der ersten Getriebeeingangswelle angeordnet und/oder gelagert sein, insbesondere frei drehbar angeordnet und/oder frei drehbar gelagert sein. Ausserdem kann die Eingangswelle in der zweiten Getriebeeingangswelle angeordnet und/oder gelagert sein, insbesondere frei drehbar angeordnet und/oder frei drehbar gelagert sein.

Das Doppelkupplungsgetriebe kann ausserdem das erste Koppelelement umfassen. Das erste Koppelelement kann insbesondere zum Koppeln der Schalträder der zweiten und dritten Stirnradstufe ausgebildet sein. Das erste Koppelelement kann dazu an der Ausgangswelle zwischen der zweiten und dritten Stirnradstufe angeordnet sein, und insbesondere auf der Ausgangswelle gelagert sein. Die zwei Schalträder können mit dem ersten Koppelelement drehfest und lösbar verbindbar sein, wobei die zwei gekoppelten Schalträder insbesondere auf der Ausgangswelle drehbar und/oder lose angeordnet sein können. Dabei können die zwei drehbar gelagerten Schalträder der zweiten und dritten Stirnradstufe über das erste Koppelelement derart koppelbar sein, dass in Abhängigkeit von einem Schaltzustand des ersten Koppelelements zwischen den zwei Schalträdern eine drehfeste Verbindung herstellbar ist. Mit anderen Worten, die zwei Schalträder können mit dem ersten Koppelelement derart verbunden werden, dass die erste und zweite Getriebeeingangswelle in Abhängigkeit gebracht werden. Im Speziellen werden also bei einer Windungsgangstufe das Schaltrad der zweiten Stirnradstufe und das Schaltrad der dritten Stirnradstufe miteinander gekoppelt, um dadurch einen gemeinsamen Kraft- und Leistungsfluss durch die erste und zweite Getriebeeingangswelle zu realisieren.

Im Speziellen kann das Doppelkupplungsgetriebe genau zwei Getriebeeingangswellen, die erste und zweite Getriebeeingangswelle, genau die Ausgangswelle sowie genau das erste und zweite Schaltelement, umfassen. Ausserdem kann das Doppelkupplungsgetriebe genau vier Stirnradstufen umfassen. Die erste Stirnradstufe kann ein erstes Festrad umfassen, das insbesondere an oder auf der ersten Getriebeeingangswelle angeordnet ist, und das mit einem ersten Schaltrad in Eingriff stehen kann, das insbesondere an oder auf der Ausgangswelle angeordnet ist. Die zweite Stirnradstufe kann ein zweites Festrad umfassen, das insbesondere an oder auf der ersten Getriebeeingangswelle angeordnet ist, und das mit einem zweiten Schaltrad in Eingriff stehen kann, das insbesondere an oder auf der Ausgangswelle angeordnet ist. Die dritte Stirnradstufe kann ein drittes Festrad umfassen, das insbesondere an oder auf der zweiten Getriebeeingangswelle angeordnet ist, und das mit einem dritten Schaltrad in Eingriff stehen kann, das insbesondere an oder auf der Ausgangswelle angeordnet ist. Die vierte Stirnradstufe kann ein viertes Festrad umfassen, das insbesondere an oder auf der zweiten Getriebeeingangswelle angeordnet ist, und das mit einem vierten Schaltrad in Eingriff stehen kann, das insbesondere an oder auf der Ausgangswelle angeordnet ist. Eine Windungsgangstufe kann schaltbar sein, indem zwei der Schalträder, also insbesondere das zweite und dritte Schaltrad, durch das erste Koppelelement drehfest miteinander verbunden und gleichzeitig die erste oder vierte Stirnradstufe aktiviert sein, also gleichzeitig das erste Schaltrad durch ein zweites Koppelelement oder das vierte Schaltrad durch ein drittes Koppelelement mit der Ausgangswelle verbunden werden. Dadurch können zwei Gangstufen als Windungsgangstufen realisiert sein. Das Doppelkupplungsgetriebe kann also im Speziellen sechs Gangstufen oder Gruppengangstufen umfassen, die insbesondere lastschaltbar sind. Das Doppelkupplungsgetriebe kann vier Gangstufen aufweisen, die nur über eine Stirnradstufe schaltbar sind und zusätzlich zwei Gangstufen, die als Windungsgangstufen schaltbar sind.

Das erste Koppelelement kann zwischen einer ersten Schaltstellung, in der das Schaltrad der zweiten Stirnradstufe und das Schaltrad der dritten Stirnradstufe gekoppelt sind, und einer zweiten Schaltstellung beweglich sein, in der das Schaltrad der zweiten Stirnradstufe und das Schaltrad der dritten Stirnradstufe voneinander gelöst sind. Die Schalträder können durch das erste und/oder zweite und/oder dritte Koppelelement mit der Ausgangswelle drehfest und lösbar verbindbar sein, insbesondere jeweils eines der Schalträder mit einem der Koppelelemente mit der Ausgangswelle drehfest und lösbar verbindbar sein. Die Koppelelemente können drehfest und axial verschiebbar auf der Ausgangswelle gelagert und/oder mittels eines oder mehrerer Stellelemente bewegbar sein, insbesondere axial bewegbar sein. Die Koppelelemente können zwischen jeweils zwei Schalträdern angeordnet sein, wobei insbesondere die zu den Schalträdern zugehörigen Festräder auf der gleichen Getriebeeingangswelle, also der ersten oder zweiten Getriebeeingangswelle, angeordnet sind. Das erste Koppelelement kann zwischen der zweiten und dritten Stirnradstufe auf oder an der Ausgangswelle angeordnet sein. Das zweite Koppelelement kann zwischen der ersten und zweiten Stirnradstufe auf oder an der Ausgangswelle angeordnet sein. Das dritte Koppelelement kann zwischen der dritten und vierten Stirnradstufe auf oder an der Ausgangswelle angeordnet sein. Das erste und/oder zweite und/oder dritte Koppelelement können in an sich bekannter Form als Klauenkupplungen oder als Stellvorrichtungen, insbesondere Schiebemuffen, und Synchronringe umfassende Schaltpakete bzw. Synchronisierungen ausgebildet sein. In jedem Fall handelt es sich bei den Koppelelementen um drehfest und axial verschieblich auf der Ausgangswelle angeordnete Koppelmittel, mit denen die Schalträder zur Zuschaltung einer Übersetzung drehfest mit der Ausgangswelle verbindbar sind. Die Axialverschiebung der Koppelelemente kann über das oder die Stellelemente erfolgen. Dazu kann die Antriebsanordnung entsprechende Stellelemente umfassen oder insbesondere jedes Koppelelement kann jeweils ein Stellelement umfassen. Die Schaltpakete bzw. Synchronisierungen können auf der Ausgangswelle axial verschiebbare, aber mit der Ausgangswelle drehfest verbundene Stellvorrichtungen bzw. Schiebemuffe und axial direkt benachbarte, also rechts und/oder links der Stellvorrichtung oder Schiebemuffe, angeordnete Synchronringe umfassen. Die Stellvorrichtung, Schiebemuffe oder das Stellelement können zur Betätigung der Koppelelemente manuell oder hilfskraftunterstützt betätigbar sein. Dazu kann die Antriebsanordnung beispielsweise einen oder mehrere Aktuatoren umfassen, sodass die Stellvorrichtung oder Stellelement hilfskraftunterstützt betätigbar sind.

In Ausgestaltung der Erfindung umfasst eine der Stirnradstufen ein Rücklaufrad. Die Antriebsanordnung, bevorzugt das Doppelkupplungsgetriebe, besonders bevorzugt eine der Stirnradstufen, kann das Rücklaufrad umfassen. Das Rücklaufrad kann zwischen einer der ersten oder zweiten Getriebeeingangswelle und der Ausgangswelle angeordnet, insbesondere zwischengeschaltet sein. Das Rücklaufrad kann zwischen einem Festrad und Schaltrad der Stirnradstufe angeordnet sein. Dadurch können jeweils das Festrad und das Rücklaufrad und das Schaltrad und das Rücklaufrad miteinander in Eingriff stehen. Im Speziellen kann die erste oder zweite oder dritte oder vierte Stirnradstufe das Rücklauf umfassen und/oder das Rücklaufrad in diesen angeordnet sein. Im Speziellen kann das Rücklaufrad in der ersten oder vierten Stirnradstufe angeordnet sein, insbesondere zwischen dem Festrad und dem Schaltrad der ersten oder vierten Stirnradstufe. Dadurch können mit der Antriebsanordnung, insbesondere dem Doppelkupplungsgetriebe, vorteilhafterweise vier Vorwärtsgänge (davon ein Windungsgang) und zwei Rückwärtsgänge (davon ein Windungsgang) realisiert werden. Alternativ kann das Rücklaufrad in der zweiten oder dritten Stirnradstufe angeordnet sein, insbesondere zwischen dem Festrad und dem Schaltrad der zweiten oder dritten Stirnradstufe. Dadurch können mit der Antriebsanordnung, insbesondere dem Doppelkupplungsgetriebe, vorteilhafterweise drei Vorwärtsgänge als einstufige Gänge und drei Rückwärtsgänge, von denen zwei als Windungsgänge sind, realisiert werden.

In Ausgestaltung der Erfindung ist die Getriebeeinrichtung als eine Umlaufgetriebestufe ausgebildet. Die Getriebeeinrichtung kann als eine mechanische Umlaufgetriebestufe, insbesondere eine elektrisch leistungsverzweigte Umlaufgetriebestufe, ausgebildet sein. Die Getriebeeinrichtung, insbesondere die Umlaufgetriebestufe, kann ein Planetenkoppelgetriebe, insbesondere genau ein Planetenkoppelgetriebe umfassen.

Die Getriebeeinrichtung, bevorzugt die Umlaufgetriebestufe, besonders bevorzugt das Planetenkoppelgetriebe, kann mindestens oder genau ein erstes und zweites Planetengetriebe umfassen. Das erste und zweite Planetengetriebe können miteinander gekoppelt sein. Mit anderen Worten, die Getriebeeinrichtung, bevorzugt die Umlaufgetriebestufe, besonders bevorzugt das Planetenkoppelgetriebe oder das erste und zweite Planetengetriebe, kann vier nach außen geführte Wellen aufweisen, von denen eine Welle mit der zweiten Energiemaschine verbunden ist und eine Welle mit der Antriebseinheit und/oder der ersten Energiemaschine verbunden ist. Die beiden übrigen Wellen können als erste und zweite Ausgangsseite ausgebildet sein und/oder die erste und zweite Ausgangsseite können die beiden übrigen Wellen umfassen.

Die Getriebeeinrichtung, bevorzugt die Umlaufgetriebestufe, besonders bevorzugt das Planetenkoppelgetriebe oder das erste und zweite Planetengetriebe, können auch als ein Doppelplanetenträgergetriebe ausgebildet sein. Die Getriebeeinrichtung, bevorzugt die Umlaufgetriebestufe, besonders bevorzugt das Planetenkoppelgetriebe, kann als Ravigneaux-Satz und/oder als Lepelletier-Getriebe und/oder als sonstiges Planetenkoppelgetriebe ausgebildet sein. Die Getriebeeinrichtung, bevorzugt die Umlaufgetriebestufe, besonders bevorzugt das Planetenkoppelgetriebe oder das erste und zweite Planetengetriebe, können die erste und zweite Eingangsseite und die erste und zweite Ausgangsseite aufweisen. Die Getriebeeinrichtung, bevorzugt die Umlaufgetriebestufe, besonders bevorzugt das Planetenkoppelgetriebe oder das erste und zweite Planetengetriebe, können zwei verschiedene Standübersetzungen aufweisen. Vorteilhafterweise können dadurch die vier Freiheitsgrad realisiert werden. Die verschiedenen Standübersetzungen ermöglichen vorteilhafterweise unterschiedliche Übersetzungen und/oder Modi der Antriebsvorrichtung, insbesondere gleichzeitig einen kompakten Aufbau. Im Weiteren können die oben genannten Vorteile der Antriebsvorrichtung realisiert werden. Mit anderen Worten, die Getriebeeinrichtung, bevorzugt die Umlaufgetriebestufe, besonders bevorzugt das Planetenkoppelgetriebe, kann insgesamt vier mechanische Schnittstellen, bevorzugt die Eingangs- und Ausgangsseiten, besonders bevorzugt die Eingänge und Ausgänge, aufweisen. Im Speziellen können die insgesamt vier mechanische Schnittstellen, bevorzugt die Eingangs- und Ausgangsseiten, besonders bevorzugt die Eingänge und Ausgänge, vier nach außen geführte Wellen aufweisen.

Die erste Eingangsseite der Getriebeeinrichtung, bevorzugt der Umlaufgetriebestufe, besonders bevorzugt des Planetenkoppelgetriebes oder des ersten und zweiten Planetengetriebes, kann mit der Eingangswelle verbunden sein. Die Antriebseinheit und/oder die erste Energiemaschine kann mit der oder durch die Eingangswelle mit der ersten Eingangsseite der Getriebeeinrichtung, bevorzugt der Umlaufgetriebestufe, besonders bevorzugt des Planetenkoppelgetriebes oder des ersten und zweiten Planetengetriebes, verbunden sein. Die zweite Eingangsseite der Getriebeeinrichtung, bevorzugt der Umlaufgetriebestufe, besonders bevorzugt des Planetenkoppelgetriebes oder des ersten und zweiten Planetengetriebes, kann mit der zweiten Energiemaschine verbunden sein. Die erste Ausgangsseite der Getriebeeinrichtung, bevorzugt der Umlaufgetriebestufe, besonders bevorzugt des Planetenkoppelgetriebes oder des ersten und zweiten Planetengetriebes, kann mit dem Doppelkupplungsgetriebe verbunden sein, bevorzugt der dritten Eingangsseite des Doppelkupplungsgetriebes oder einer Eingangsseite des ersten und zweiten Schaltelements.

Durch Kombination des Doppelkupplungsgetriebes mit der Getriebeeinrichtung, bevorzugt der Umlaufgetriebestufe, besonders bevorzugt des Planetenkoppelgetriebes oder des ersten und zweiten Planetengetriebes, als Teil eines Doppelvariators, mit zwei Ausgangsseiten kann die zu installierende Leistung der Energiemaschinen reduziert werden, sodass der benötigte Bauraum der Antriebsanordnung reduziert werden kann. Vorteilhafterweise kann dadurch ein konstruktiv einfacher und kompakter Aufbau der Antriebsanordnung realisiert werden. Im Speziellen kann eine Antriebsanordnung, insbesondere ein Stufenlosgetriebe, mit "2 x 6", also 12, nahtlos schaltbaren (sog. "seamless shifts") Fahrbereichen oder Gängen realisiert werden. Ansonsten weist die Antriebsanordnung die oben genannten Vorteil auf.

In Ausgestaltung der Erfindung umfasst die Antriebsanordnung oder die Getriebeeinrichtung, bevorzugt die Umlaufgetriebestufe, besonders bevorzugt das Planetenkoppelgetriebe oder das erste und zweite Planetengetriebe, das dritte und vierte Schaltelement. Das dritte und/oder vierte Schaltelement sind ausgangsseitig, insbesondere wahlweise, mit dem Doppelkupplungsgetriebe, insbesondere der dritten Eingangsseite oder der Eingangsseite des ersten und zweiten Schaltelements verbindbar oder verbunden. Im Speziellen sind das dritte oder vierte Schaltelement ausgangsseitig mit dem Doppelkupplungsgetriebe, insbesondere der dritten Eingangsseite oder der Eingangsseite des ersten und zweiten Schaltelements verbindbar oder verbunden. Das dritte Schaltelement kann mit der ersten Ausgangsseite und/oder das vierte Schaltelement mit der zweiten Ausgangsseite verbindbar oder verbunden sein. Alternativ oder zusätzlich kann das dritte Schaltelement als erste Ausgangsseite und das vierte Schaltelement als zweite Ausgangsseite ausgebildet sein und/oder diese umfassen. Die Getriebeeinrichtung, bevorzugt die Umlaufgetriebestufe, besonders bevorzugt das Planetenkoppelgetriebe oder das erste und zweite Planetengetriebes, kann über oder durch das dritte oder vierte Schaltelement wahlweise mit dem Doppelkupplungsgetriebe, insbesondere der dritten Eingangsseite des Doppelkupplungsgetriebes, verbindbar oder verbunden sein. Alternativ oder zusätzlich kann die erste oder zweite Ausgangsseite der Getriebeeinrichtung, bevorzugt der Umlaufgetriebestufe, besonders bevorzugt des Planetenkoppelgetriebes oder des ersten und zweiten Planetengetriebes, über oder durch das dritte oder vierte Schaltelement wahlweise mit dem Doppelkupplungsgetriebe, insbesondere der dritten Eingangsseite des Doppelkupplungsgetriebes, verbindbar oder verbunden sein. Die erste Ausgangsseite der Getriebeeinrichtung, bevorzugt der Umlaufgetriebestufe, besonders bevorzugt des Planetenkoppelgetriebes oder des ersten und zweiten Planetengetriebes, kann über oder durch das dritte Schaltelement mit dem Doppelkupplungsgetriebe, insbesondere der dritten Eingangsseite des Doppelkupplungsgetriebes, verbindbar oder verbunden sein. Die zweite Ausgangsseite der Getriebeeinrichtung, bevorzugt der Umlaufgetriebestufe, besonders bevorzugt des reduzierten Planetengetriebes oder des ersten reduzierten Planetengetriebes, kann über oder durch das vierte Schaltelement mit dem Doppelkupplungsgetriebe, insbesondere der dritten Eingangsseite des Doppelkupplungsgetriebes, verbindbar oder verbunden sein. Von Vorteil können durch die, insbesondere wahlweise, Verbindung und/oder Kopplung, insbesondere der ersten oder zweiten Ausgangsseite, der Getriebeeinrichtung, bevorzugt der Umlaufgetriebestufe, besonders bevorzugt des Planetenkoppelgetriebes oder des ersten und zweiten Planetengetriebes, durch das dritte und/oder vierte Schaltelement mit dem Doppelkupplungsgetriebe, insbesondere der dritten Eingangsseite des Doppelkupplungsgetriebes, verschiede Modi der Getriebeeinrichtung und/oder die Drehrichtung der ersten und zweiten Ausgangsseite eingestellt und/oder verstellt werden.

In Ausgestaltung der Erfindung umfasst die Antriebsanordnung eine Leistungselektronik, wobei mit der Leistungselektronik insbesondere elektrische Leistung und/oder elektrische Energie zwischen der ersten und/oder zweiten Energiemaschine und/oder dem Energiespeicher übertragbar ist. Die Leistungselektronik kann konfiguriert sein, die erste und zweite Energiemaschine und/oder den Energiespeicher einzustellen und/oder zu verstellen und/oder anzusteuern. Im Speziellen kann die Leistungselektronik konfiguriert sein, elektrische Leistung und/oder elektrische Energie zwischen der ersten und/oder zweiten Energiemaschine und/oder dem Energiespeicher zu übertragen. Die elektrische Leistung und/oder elektrische Energie kann von der ersten zur zweiten Energiemaschine und/oder zum Energiespeicher übertragbar sein und umgekehrt. Die Leistungselektronik kann ein elektronisches Steuergerät und/oder einen Inverter oder Wechselrichter und/oder einen Spannungswandler umfassen. Im Betrieb kann der Inverter oder Wechselrichter die Spannung und/oder Energie und/oder Leistung des Energiespeichers in eine Spannung und/oder Energie und/oder Leistung umwandeln, welche die Energiemaschinen benötigen. Zum Aufladen des Energiespeichers kann dieser Vorgang umgekehrt werden. Das elektronisches Steuergerät kann eine Recheneinheit, einen Computer, einen Prozessor, einen Speicher und/oder alle Software, Hardware, Algorithmen, Anschlüsse, insbesondere auch Sensoren, umfassen, die für die Einstellung und/oder Verstellung der Energiemaschine erforderlich sind. Der Energiespeicher kann vom elektronischen Steuergerät, alternativ die Steuereinheit, ansteuerbar sein, um elektrische Energie und/oder Leistung zu speichern und/oder an die Energiemaschinen abzugeben. Das elektronischen Steuergerät, alternativ die Steuereinheit, und/oder die Energiemaschinen können mit der Leistungselektronik und/oder dem Energiespeicher elektrisch verbunden und/oder elektrisch koppelbar sein. Alternativ kann die Steuereinheit als elektronisches Steuergerät ausgebildet sein oder dieses umfassen und/oder die Aufgaben des elektronischen Steuergeräts übernehmen. Die Steuereinheit und/oder das elektronische Steuergerät kann konfiguriert sein, die erste und/oder zweite Energiemaschine und/oder den Energiespeicher einzustellen und/oder zu verstellen, sodass die von der ersten und/oder zweiten Energiemaschine generierte und/oder die im Energiespeichers gespeicherte elektrische Energie bzw. Leistung abgeben wird.

In Ausgestaltung der Erfindung umfasst die Antriebsanordnung ein Modul zur Drehrichtungsumkehr oder eine Getriebestufe zur Drehrichtungsumkehr. Vorzugsweise ist das Modul zur Drehrichtungsumkehr oder die Getriebestufe zur Drehrichtungsumkehr im Leistungsfluss zwischen der ersten und der zweiten Energiemaschine, und/oder insbesondere vor der Getriebeeinrichtung, angeordnet oder im Leistungsfluss nach dem Doppelkupplungsgetriebe angeordnet oder im Leistungsfluss zwischen der Getriebeeinrichtung und dem Doppelkupplungsgetriebe angeordnet. Das Modul oder die Getriebestufe zur Drehrichtungsumkehr kann als ein drittes Planetengetriebe ausgebildet sein. Die Drehrichtungsumkehr kann am Ausgang bzw. Abtrieb oder abtriebsseitig des dritten Planetengetriebes, also insbesondere einer Sonne, insbesondere einer dritten Sonne, des dritten Planetengetriebes, durch eine entsprechende Ansteuerung eine oder mehrerer auf das dritte Planetengetriebe einwirkenden Bremsvorrichtung(en) realisiert werden. Das Modul oder die Getriebestufe zur Drehrichtungsumkehr kann eine, insbesondere dem dritten Planetengetriebe, vorgelagerte, Kupplungseinrichtung aufweisen. Letztere ermöglicht eine zuverlässige Kraft- und Momentenübertragung entlang des Leistungsflusses im Bereich des Moduls oder der Getriebestufe zur Drehrichtungsumkehr. Die Kupplungseinrichtung kann eingangsseitig mit der Eingangswelle oder der ersten und/oder zweiten Ausgangsseite verbindbar oder verbunden sein. Die Kupplungseinrichtung kann abtriebsseitig, vorzugsweise mit einer Welle, mit der Sonne, insbesondere der dritten Sonne, des dritten Planetengetriebes verbunden sein. Das Modul oder die Getriebestufe zur Drehrichtungsumkehr kann eingangsseitig mit der Eingangswelle verbindbar oder verbunden sein. Das Modul oder die Getriebestufe zur Drehrichtungsumkehr, bevorzugt ein Planetenträger des dritten Planetengetriebes, besonders bevorzugt ein dritter Planetenträger des dritten Planetengetriebes, kann mit der Eingangswelle verbindbar oder verbunden sein. Alternativ kann das Modul oder die Getriebestufe zur Drehrichtungsumkehr eingangsseitig mit der ersten und/oder zweiten Ausgangsseite verbindbar oder verbunden sein. Das Modul oder die Getriebestufe zur Drehrichtungsumkehr, bevorzugt ein Planetenträger des dritten Planetengetriebes, besonders bevorzugt ein dritter Planetenträger des dritten Planetengetriebes, kann mit der ersten und/oder zweiten Ausgangsseite verbindbar oder verbunden sein.

Das Modul oder die Getriebestufe zur Drehrichtungsumkehr kann ausgangsseitig oder abtriebsseitig mit dem Doppelkupplungsgetriebe, insbesondere der dritten Eingangsseite des Doppelkupplungsgetriebes, verbunden sein. Das Modul oder die Getriebestufe zur Drehrichtungsumkehr, bevorzugt die Sonne, insbesondere die dritte Sonnen, des dritten Planetengetriebes, kann mit dem Doppelkupplungsgetriebe, insbesondere der dritten Eingangsseite des Doppelkupplungsgetriebes, verbunden sein. Alternativ kann das Modul oder die Getriebestufe zur Drehrichtungsumkehr ausgangsseitig oder abtriebsseitig, wenn das erste Planetengetriebe, eine erste und zweite Sonne und einen ersten und zweiten Planetensatz und einen ersten Planetenträger umfasst, mit der ersten Eingangsseite oder der Eingangsseite, insbesondere der dritten Eingangsseite, des Doppelkupplungsgetriebes verbunden sein. Das Modul zur Drehrichtungsumkehr oder die Getriebestufe zur Drehrichtungsumkehr ermöglicht es, verschiedene Drehrichtungen der Antriebsanordnung, insbesondere an der Ausgangswelle und/oder dem Fahrantrieb, und somit einen Vorwärts- und Rückwärtsbetrieb der Arbeitsmaschine bereitzustellen, ohne dass unterschiedliche Rotationsrichtungen der Umlaufgetriebestufe oder des Doppelkupplungsgetriebes realisiert werden müssen. Diese Alternative zu einem Rückwärtsgang im Doppelkupplungsgetriebe reduziert vorteilhaft die Komplexität der Antriebsanordnung. Die Funktionalität der Drehrichtungsumkehr kann somit in einer kompakten Bauweise bereitgestellt und besonders geräuscharm gestaltet werden.

In Ausgestaltung der Erfindung ist eine Trennkupplung zwischen der Antriebseinheit und der Getriebeeinrichtung oder zwischen der Antriebseinheit und der ersten Energiemaschine angeordnet. Durch Einsatz der Trennkupplung zwischen der Antriebseinheit und der Getriebeeinrichtung oder der ersten Energiemaschine kann die Antriebseinheit von der Antriebsanordnung entkoppelt werden. Dadurch kann die Antriebsanordnung vorteilhafterweise in einem batterieelektrischen Fahrbereich betrieben werden, also insbesondere ein hybrider Antrieb der Antriebsanordnung realisiert werden.

In Ausgestaltung der Erfindung umfasst die Antriebsanordnung eine Steuereinheit, wobei die Antriebsanordnung mit der Steuereinheit betreibbar ist. Alternativ oder zusätzlich umfasst die Arbeitsmaschine die Steuereinheit, wobei die Arbeitsmaschine und/oder die Antriebsanordnung mit der Steuereinheit betreibbar ist. Mit anderen Worten, die Steuereinheit ist konfiguriert, die Arbeitsmaschine und/oder die Antriebsanordnung, insbesondere die Antriebseinheit, zu betreiben. Die Steuereinheit kann mit der ersten und/oder zweiten Energiemaschine und/oder der Antriebseinheit signalverbunden und/oder wirkend gekoppelt und/oder signalübertragend und/oder datenleitend verbunden sein. Die Steuereinheit kann konfiguriert sein, eines oder mehrere Drehzahlsignale und/oder Drehmomentsignale von der Antriebsanordnung, insbesondere von Drehzahl- und/oder Drehmomentsensoren der Antriebsanordnung, und/oder der ersten und/oder zweiten Energiemaschine und/oder der Antriebseinheit zu empfangen. Die Steuereinheit kann konfiguriert sein, eine Drehzahl und/oder ein Drehmoment mit dem Drehzahlsignal und/oder dem Drehmomentsignal zu ermitteln. Die Steuereinheit kann konfiguriert sein, die Drehzahl und/oder das Drehmoment der Antriebsanordnung, insbesondere der ersten und/oder zweiten Energiemaschine und/oder der Antriebseinheit, einzustellen und/oder zu verstellen, insbesondere eine vorgebbare Drehzahl und/oder ein vorgebbares Drehmoment einzustellen und/oder zu verstellen. Weitere Ausbildungen der Steuereinheit sind oben und unten beschrieben.

In Ausgestaltung der Erfindung ist die Eingangswelle mit einem ersten Leistungsausgang verbunden. Die Antriebseinheit und/oder die erste Energiemaschine kann mit der Eingangswelle verbunden sein. Die Antriebseinheit und/oder die erste Energiemaschine können über die oder durch die Eingangswelle mit dem ersten Leistungsausgang verbindbar oder verbunden sein. Der erste Leistungsausgang kann eine Zapfwelleneinheit umfassen oder als Zapfwelleneinheit ausgebildet sein. Die Zapfwelleneinheit kann ein Zapfwellengetriebe und/oder eine Zapfwelle umfassen. Die Antriebseinheit und/oder die erste Energiemaschine kann, insbesondere über die Eingangswelle, mit dem ersten Leistungsausgang, bevorzugt der Zapfwelleneinheit, besonders bevorzugt dem Zapfwellengetriebe und/oder der Zapfwelle, verbindbar oder verbunden sein. Der erste Leistungsausgang, bevorzugt die Zapfwelleneinheit, besonders bevorzugt das Zapfwellengetriebe und/oder die Zapfwelle, ist mit der Antriebseinheit und/oder der ersten Energiemaschine antreibbar. Die Steuereinheit kann konfiguriert sein, die Drehzahl des ersten Leistungsausgangs einzustellen und/oder zu verstellen.

Die Antriebsanordnung kann einen Durchgang oder mehrere Durchgänge, insbesondere einen oder mehrere zentrale Durchgänge, für die Eingangswelle aufweisen. Der Durchgang oder die Durchgänge, insbesondere der oder die zentralen Durchgänge, kann oder können als eine oder mehrere Wellendurchführungen, insbesondere eine oder mehrere zentrale Wellendurchführungen, für die Eingangswelle ausgebildet sein.

Die Getriebeeinrichtung und/oder das Doppelkupplungsgetriebe und/oder das Anfahrmodul und/oder das Modul zur Drehrichtungsumkehr können also eine oder mehrere Wellendurchführung, insbesondere eine oder mehrere zentrale Wellendurchführung, für die Eingangswelle aufweisen. Im Speziellen können:
- das erste und/oder zweite und/oder dritte und/oder vierte und/oder fünfte und/oder jedes weitere Schaltelement und/oder die erste und zweite Getriebeeingangswelle, und/oder
- die Getriebeeinrichtung, bevorzugt die Umlaufgetriebestufe, besonders bevorzugt das erste reduzierte Planetengetriebe, insbesondere dessen Sonnen, und/oder
- die erste und/oder zweite Übersetzungsstufe und/oder die weiteren Wellen
- die Kupplungseinrichtung und/oder die Trennkupplung
jeweils Durchgänge, insbesondere Wellendurchführungen, für die Eingangswelle aufweisen. Dadurch kann vorteilhafterweise eine kompakte und/oder modulare und/oder konstruktiv einfache Ausgestaltung der Antriebsanordnung, insbesondere des ersten Leistungsausgangs, erreicht werden.

Die Erfindung betrifft weiter eine Arbeitsmaschine, umfassend eine Antriebsanordnung, insbesondere eine Antriebsanordnung nach einem der Ansprüche 1 bis 12. Die Arbeitsmaschine kann eine Baumaschine oder ein Zugfahrzeug, bevorzugt ein landwirtschaftliches Zugfahrzeug, beispielsweise ein Traktor oder Schlepper sein. Die Arbeitsmaschine weist die oben beschriebenen Vorteile der Antriebsanordnung auf. Die Arbeitsmaschine umfasst die Antriebsanordnung. Die Antriebsanordnung ist zum Antreiben der Arbeitsmaschine ausgebildet. Die Arbeitsmaschine kann eine, zwei oder mehrere Achse(n) umfassen. Die Arbeitsmaschine kann mit einer Drehzahl und/oder Kraft und/oder einem Drehmoment der Antriebseinheit antreibbar sein.

Die Steuereinheit kann zur Steuerung und/oder Regelung, insbesondere zum Einstellen und/oder Verstellen, der Arbeitsmaschine, insbesondere der Antriebseinheit eingerichtet sein. Die Arbeitsmaschine kann eine Ein- und Ausgabeeinheit umfassen. Die Steuereinheit kann mit der Ein- und Ausgabeeinheit signalverbunden und/oder wirkend gekoppelt und/oder signalübertragend und/oder datenleitend verbunden sein, und/oder mit der Ein- und Ausgabeeinheit ansteuerbar und/oder einstellbar und/oder verstellbar sein. Die Ein- und Ausgabeeinheit kann in die Steuereinheit oder umgekehrt integriert sein. Der Bediener der Arbeitsmaschine kann mit der oder durch die Ein- und Ausgabeeinheit beispielsweise eine Geschwindigkeit der Arbeitsmaschine einstellen und/oder verstellen. Die Steuereinheit kann konfiguriert sein, die erste und/oder zweite Energiemaschine und/oder den Stator einzustellen und/oder zu verstellen, insbesondere derart, dass diese elektrisch beaufschlagt werden.

Die Arbeitsmaschine kann ausserdem eines oder mehrere Hilfsaggregate umfassen, beispielsweise eine Pumpe und/oder einen Kühler etc.. Die Hilfsaggregate können ein Bestandteil der Hydraulik der Antriebsanordnung sein. Die Arbeitsmaschine kann den ersten Leistungsausgang, insbesondere die Zapfwelleneinheit umfassen. Die Steuereinheit kann konfiguriert sein, die Antriebsanordnung und/oder Arbeitsmaschine mit einem Fahrsignal einzustellen und/oder zu verstellen und/oder anzusteuern und mit dem oder basierend auf dem Fahrsignal eine Geschwindigkeit der Arbeitsmaschine einzustellen und/oder zu verstellen, insbesondere zu erhöhen oder zu verringern. Die Arbeitsmaschine kann das oder die Bodeneingriffsmittel umfassen. Die Bodeneingriffsmittel können die Arbeitsmaschine auf dem Boden abstützen und/oder tragen. Ein Zugfahrzeugrahmen der Arbeitsmaschine kann sich auf die Bodeneingriffsmittel abstützen. Die Bodeneingriffsmittel können Räder oder Raupen oder Ketten sein. Die Bodeneingriffsmittel können insbesondere Vorderräder und Hinterräder sein. Die Arbeitsmaschine kann einen Geschwindigkeitssensor, beispielsweise einen Drehzahlsensor, zur Erfassung einer Geschwindigkeit der Arbeitsmaschine umfassen. Im Speziellen kann die Steuereinheit konfiguriert sein, eine Kraft und/oder ein Drehmoment und/oder eine Drehzahl der Antriebseinheit und/oder der ersten und/oder zweiten Energiemaschine mit dem Fahrsignal oder mehreren Fahrsignalen einzustellen und/oder zu verstellen und/oder anzusteuern.

Die Schaltelemente, insbesondere deren Ventile oder Ventileinrichtungen oder Aktuatoren, und/oder die Antriebseinheit und/oder der erste Leistungsausgang, insbesondere die Zapfwelleneinheit, und/oder die erste und/oder zweite Energiemaschine und/oder der Energiespeicher und/oder die Leistungselektronik können mit der Steuereinheit ansteuerbar und/oder einstellbar und/oder verstellbar, bevorzugt steuerbar und/oder regelbar sein. Die Steuereinheit kann Signale zur Steuerung des Betriebs der Antriebsanordnung und/oder der Arbeitsmaschine versenden und/oder empfangen. Zweckmäßigerweise können die Signale über ein geeignetes Datenkommunikationsnetzwerk bereitgestellt werden, beispielsweise eines, das dem ISOBUS- und/oder CAN-Standard entspricht. Die Steuereinheit kann als ein elektronisches Modul, ein eingebettetes System, eine Recheneinheit, ein Computer, als ein Modul zum Steuern und/oder Regeln der Antriebsanordnung und/oder der Arbeitsmaschine ausgebildet sein. Die Steuereinheit kann einen oder mehrere Prozessoren, einen Speicher und/oder alle Software, Hardware, Algorithmen, Anschlüsse, insbesondere auch Sensoren, umfassen, die für die Steuerung und/oder Regelung der Antriebsanordnung und/oder der Arbeitsmaschine erforderlich sind. Verfahren können als Programm oder Algorithmus ausgebildet sein, welche auf und/oder mit der Steuereinheit ausführbar sind. Die Steuereinheit kann jedes Gerät umfassen, das Daten von verschiedenen Sensoren analysiert, Daten vergleichen und die erforderlichen Entscheidungen treffen, um den Betrieb der Antriebsanordnung und/oder der Arbeitsmaschine und die erforderlichen Aufgaben zur Steuerung und/oder Regelung des Betriebs der Antriebsanordnung und/oder der Arbeitsmaschine, zu steuern und/oder zu regeln und/oder auszuführen. Die Steuereinheit kann mit den Bauteilen der Antriebsanordnung und/oder der Arbeitsmaschine, also insbesondere den Schaltelementen, insbesondere deren Ventile oder Ventileinrichtungen oder Aktuatoren, und/oder der Antriebseinheit und/oder dem ersten Leistungsausgang, insbesondere die Zapfwelleneinheit, und/oder der ersten und/oder zweiten Energiemaschine und/oder dem Energiespeicher und/oder der Leistungselektronik und/oder den Sensoren signalverbunden und/oder wirkend gekoppelt und/oder signalübertragend und/oder datenleitend verbunden sein. Unter einer signalverbunden und/oder wirkend gekoppelten und/oder signalübertragenden und/oder datenleitenden Verbindung kann dabei unter anderem verstanden werden, dass ein Austausch von Signalen bzw. Daten zwischen den verbundenen Bauteilen und der Steuereinheit stattfinden kann. Signale können beispielsweise von der Steuereinheit empfangen und versendet werden und/oder verarbeitet und/oder bearbeitet werden. Die Verbindung zwischen der Steuereinheit sowie den Bauteilen bzw. Komponenten der Antriebsanordnung und/oder der Arbeitsmaschine kann kabelgebunden, insbesondere also mit Kabel, und/oder kabellos, also per Funk, beispielsweise mit Bluetooth oder WLAN realisiert sein. Die Verbindung zwischen der Steuereinheit sowie den Bauteilen bzw. Komponenten der Antriebsanordnung und/oder der Arbeitsmaschine kann beispielsweise durch ein lokales Netzwerk (LAN), ein Funkzugangsnetz (RAN), ein Metropolitan Area Network (MAN), ein Wide Area Network (WAN), Worldwide Interoperability for Microwave Access (WIMAX), ein drahtloses lokales Netzwerk (WLAN) realisiert werden. Die Kommunikation kann beispielsweise mittels Isobus, CAN-Bus oder ähnlichem erfolgen. Die Steuereinheit kann unmittelbar mit, insbesondere mit der in einer Kabine der Arbeitsmaschine angeordneten, Ein- und Ausgabeeinheit in Verbindung stehen, durch welche von einer Bedienperson eingegebene Daten an die Steuereinheit übertragen oder von dieser empfangen und ausgegeben werden können. Die Steuereinheit kann in die Ein- und Ausgabeeinheit integriert sein, oder umgekehrt.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:
- Fig. 1: eine schematische Darstellung eines ersten Ausführungsbeispiels einer erfindungsgemässen Arbeitsmaschine, und
- Fig. 2: eine schematische Darstellung des ersten Ausführungsbeispiels der erfindungsgemässen Antriebsanordnung, und
- Fig. 3: eine schematische Darstellung eines zweiten Ausführungsbeispiels der erfindungsgemässen Antriebsanordnung, und
- Fig. 4: eine schematische Darstellung eines dritten Ausführungsbeispiels der erfindungsgemässen Antriebsanordnung, und
- Fig. 5: eine schematische Darstellung eines vierten Ausführungsbeispiels der erfindungsgemässen Antriebsanordnung, und
- Fig. 6: eine schematische Darstellung eines weiteren Ausführungsbeispiels des Doppelkupplungsgetriebes.

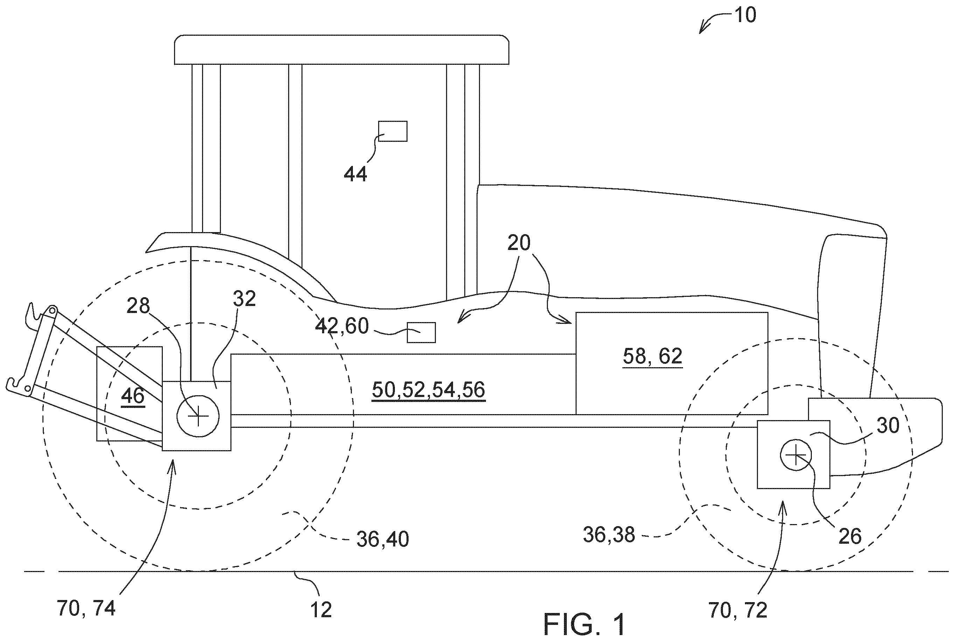

Figur 1 zeigt eine schematische Darstellung eines ersten Ausführungsbeispiels einer erfindungsgemässen Arbeitsmaschine 10, hier eines landwirtschaftlichen Zugfahrzeugs oder Traktors bzw. Schleppers, mit einer erfindungsgemässen Antriebsanordnung 20. Die Arbeitsmaschine 10 ist mit der Antriebsanordnung 20 antreibbar. Die Antriebsanordnung 20 umfasst eine Getriebeeinrichtung 50 und ein im Leistungsfluss der Getriebeeinrichtung 50 nachgelagertes Doppelkupplungsgetriebe 52, wobei mindestens ein Gang des Doppelkupplungsgetriebes als Windungsgang ausgeführt ist. Die Antriebsanordnung 20 umfasst weiter eine erste und zweite Energiemaschine 54, 56 sowie eine Eingangswelle 86 und eine Ausgangswelle 88.

Die Arbeitsmaschine 10, oder insbesondere die Antriebsanordnung 20, umfasst eine erste Fahrzeugachse 26 und eine zweite Fahrzeugachse 28. Die erste Fahrzeugachse 26 kann eine Vorderachse und die zweite Fahrzeugachse 28 eine Hinterachse sein. Ausserdem kann die erste Fahrzeugachse 26 als lenkbare Achse ausgeführt sein. Die Arbeitsmaschine 10 kann eines oder mehrere Bodeneingriffsmittel 36, hier in Form von Rädern 38, 40 dargestellt, aufweisen, welche mit einem Untergrund 12 zur Übertragung von Antriebskräften in Eingriff stehen und/oder durch die sich die Arbeitsmaschine 10 auf dem Untergrund 12 abstützt. Die Arbeitsmaschine 10, insbesondere die Antriebsanordnung 20, kann einen Fahrantrieb 70, insbesondere einen Vorderachsantrieb 72 und einen Hinterachsantrieb 74 umfassen. Der Fahrantrieb 70 kann die erste Fahrzeugachse 26 und/oder die zweite Fahrzeugachse 28 und/oder ein erstes Differenzialgetriebe 30 und/oder ein zweites Differenzialgetriebe 32 und/oder das oder die Bodeneingriffsmittel 36 umfassen. Der Vorderachsantrieb 72 kann die erste Fahrzeugachse 26 und/oder das erste Differenzialgetriebe 30, also insbesondere ein Vorderachsdifferenzial, und/oder das oder die Bodeneingriffsmittel 36 umfassen. Der Hinterachsantrieb 74 kann die zweite Fahrzeugachse 28 und/oder das zweite Differenzialgetriebe 32, also insbesondere ein Hinterachsdifferenzial, und/oder das oder die Bodeneingriffsmittel 36 umfassen. Die erste Fahrzeugachse 26 kann mit dem ersten Differenzialgetriebe 30 verbunden sein. Die zweite Fahrzeugachse 28 kann mit dem zweiten Differenzialgetriebe 32 verbunden sein.

Die Ausgangswelle 88 kann mit dem Fahrantrieb 76, insbesondere dem ersten und/oder zweiten Differenzialgetriebe 30, 32, insbesondere nur mit dem zweiten Differenzialgetriebe 32, verbunden sein. Die Ausgangswelle 88 kann über das zweite oder mit dem zweiten Differenzialgetriebe 32 mit der zweiten Fahrzeugachse 28 verbunden sein. Über das erste oder mit dem ersten Differenzialgetriebe 30 und/oder das zweite oder mit dem zweiten Differenzialgetriebe 32 kann eine Kraft und/oder ein Drehmoment und/oder eine Drehzahl vom Abtrieb 54 an die erste und/oder zweite Fahrzeugachse 26, 28, und somit insbesondere an die Bodeneingriffsmittel 36, übertragbar sein. Die Antriebsanordnung 20 oder die Arbeitsmaschine 10 kann eine Antriebseinheit 58 umfassen. Die Antriebseinheit 58 kann mit der Eingangswelle 86 verbindbar oder verbunden sein. Mit der Antriebsanordnung 20, insbesondere der Antriebseinheit 58, kann eine Drehbewegung und/oder Kraft und/oder ein Drehmoment und/oder eine Drehzahl erzeugbar und, insbesondere über die Getriebeeinrichtung 50 und das Doppelkupplungsgetriebe 52, auf die Ausgangswelle 88, auf die erste und/oder zweite Fahrzeugachse 26, 28 übertragbar sein. Die erste und/oder zweite Fahrzeugachse 26, 28 wandeln die Drehbewegung und/oder Kraft und/oder das Drehmoment und/oder die Drehzahl in eine Drehbewegung und/oder Kraft und/oder ein Drehmoment und/oder Drehzahl eines oder mehrerer Bodeneingriffsmittel 36 und somit in einen Schub der Arbeitsmaschine 10 um. Die Arbeitsmaschine 10 kann ausserdem einen Zugfahrzeugrahmen umfassen. Der Zugfahrzeugrahmen kann insbesondere von den an der ersten und/oder zweiten Fahrzeugachse 28, 30 aufgehängten Bodeneingriffsmitteln 36, insbesondere den Rädern 38, 40 getragen werden kann. Im Speziellen sind ein erstes Paar Räder 38 an der ersten Fahrzeugachse 26 und ein zweites Paar Räder 40 an der zweiten Fahrzeugachse 28 angeordnet sein. Dabei können die Durchmesser der Rädern 38, 40 voneinander abweichen, insbesondere kann der Durchmesser des ersten Paars Räder 38 kleiner als der Durchmesser des zweiten Paars Räder 40 sein. Alternativ können die Bodeneingriffsmittel 36 auch als Raupen oder Ketten ausgebildet und angeordnet sein. Die Arbeitsmaschine 10, insbesondere die Antriebsanordnung 20, kann einen ersten Leistungsausgang 46 umfassen. Der erste Leistungsausgang 46 kann eine Zapfwelleneinheit 108 umfassen. Der erste Leistungsausgang 46 kann zum Antreiben eines Arbeitsgeräts (nicht gezeigt) vorgesehen sein, das über eine Schnittstelle (z.B. Dreipunktschnittstelle) an der Arbeitsmaschine 10 anbringbar ist. Die Arbeitsmaschine 10, insbesondere alternativ oder zusätzlich die Antriebsanordnung 20, kann eine Steuereinheit 42 und/oder eine Ein- und Ausgabeeinheit 44 umfassen. Die Steuereinheit 42 kann mit der Ein- und Ausgabeeinheit 44 signalverbunden und/oder wirkend gekoppelt und/oder signalübertragend und/oder datenleitend verbunden sein. Im Speziellen kann die Steuereinheit 42 unmittelbar mit der in einer Kabine der Arbeitsmaschine 10 angeordneten Ein- und Ausgabeeinheit 44 Verbindung stehen, durch welche von einer Bedienperson eingegebene Daten an die Steuereinheit 42 übertragen oder von dieser empfangen und ausgegeben werden können. Die Antriebsanordnung 20, und/oder insbesondere die Arbeitsmaschine 10, kann mit der Steuereinheit 42 einstellbar und/oder verstellbar sein. Die Steuereinheit 42 ist mit der Antriebseinheit 58 und/oder der ersten und/oder zweiten Energiemaschine 54, 56 signalverbunden und/oder wirkend gekoppelt und/oder signalübertragend und/oder datenleitend verbunden.

Die Steuereinheit 42 ist konfiguriert, die Drehzahl und/oder das Drehmoment und/oder die Kraft der Antriebsanordnung 20, insbesondere der Antriebseinheit 58 und/oder der ersten und/oder zweiten Energiemaschine 54, 56, einzustellen und/oder zu verstellen, insbesondere diese anzusteuern und/oder zu steuern und/oder zu regeln. Die Steuereinheit 42 kann konfiguriert sein, eine vorgebbare Drehzahl und/oder ein vorgebbares Drehmoment und/oder eine vorgebbare Kraft der Antriebsanordnung 20, insbesondere der Antriebseinheit 58 und/oder der ersten und/oder zweiten Energiemaschine 54, 56, einzustellen und/oder zu verstellen, insbesondere diese anzusteuern und/oder zu steuern und/oder zu regeln. Die Steuereinheit 42 kann konfiguriert sein, die Antriebsanordnung 20, insbesondere alternativ oder zusätzlich die Arbeitsmaschine 10, einzustellen und/oder zu verstellen, um die Drehzahl und/oder das Drehmoment und/oder die Kraft der Antriebseinheit 58 einzustellen und/oder zu verstellen, insbesondere zu steuern und/oder zu regeln. Ausserdem kann die Arbeitsmaschine 10, alternativ oder zusätzlich die Antriebsanordnung 20, eine Leistungselektronik 60 umfassen, um die elektrische Leistung bzw. Energie zwischen der ersten und/oder zweiten Energiemaschine 54, 56 und einem Energiespeicher 62, hier beispielsweise eine Batterie (Akkumulator), zu übertragen. Die Steuereinheit 42 kann mit der Leistungselektronik 60 und dem Energiespeicher 62 signalverbunden und/oder wirkend gekoppelt und/oder signalübertragend und/oder datenleitend verbunden. Der Energiespeicher 62 kann die elektrisch angetriebenen Komponenten der Antriebsanordnung 20 mit Strömen bzw. Spannungen geeigneter Frequenz und Amplituden, um gewünschte Ausgangsdrehzahlen oder - Drehmomente für den ersten Leistungsausgang 46 und/oder die Antriebsanordnung 20 bereitzustellen.

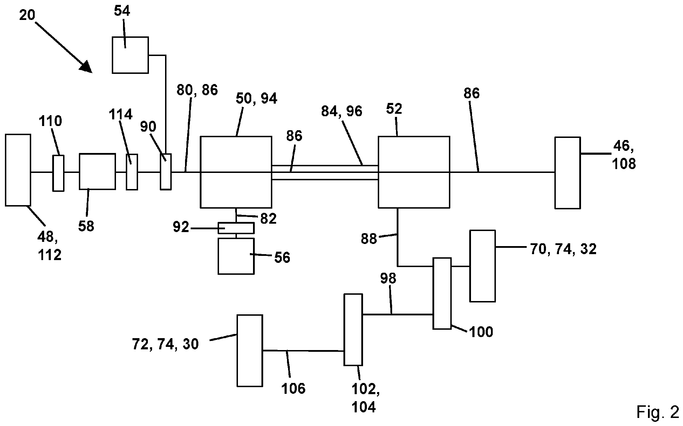

Figur 2 zeigt eine schematische Darstellung eines ersten Ausführungsbeispiels der erfindungsgemässen Antriebsanordnung 20. Die in Figur 2 gezeigte Antriebsanordnung 20 entspricht im Wesentlichen der in Figur 1 gezeigten Antriebsanordnung 20, sodass im Folgenden lediglich auf Details und/oder Unterschiede eingegangen wird. Die in Figur 1 dargestellte Arbeitsmaschine 10 kann die in Figur 2 dargestellte Antriebsanordnung 20 umfassen. Die Antriebsanordnung 20 für die Arbeitsmaschine 10 umfasst die Getriebeeinrichtung 50 mit einer ersten und zweiten Eingangsseite 80, 82 und einer ersten und zweiten Ausgangsseite 84, 96 und das Doppelkupplungsgetriebe 52.

Das Doppelkupplungsgetriebe 52 ist mit der ersten und/oder zweiten Ausgangsseite 84, 96, insbesondere wahlweise mit der ersten oder zweiten Ausgangsseite 84, 96, der Getriebeeinrichtung 50 verbindbar oder verbunden, beispielsweise mit jeweils einer weiteren Welle, die bevorzugt als Hohlwelle ausgebildet sein kann, und/oder einem Schaltelement. Die Antriebsanordnung 20 umfasst weiter die Eingangswelle 86 und die Ausgangswelle 88. Die Eingangswelle 86 kann mit der ersten Eingangsseite 80 verbindbar oder verbunden sein. Die erste Energiemaschine 54 ist mit der Eingangswelle 86 verbunden. Die erste Energiemaschine 54 kann direkt oder über eine oder mit einer ersten oder durch eine erste Übersetzungsstufe 90 und/oder eine weitere Welle mit der Eingangswelle 86 verbunden sein. Ausserdem kann die Antriebseinheit 58 mit der Eingangswelle 86 verbindbar oder verbunden sein. Die zweite Energiemaschine 56 ist mit der zweiten Eingangsseite 82 verbunden. Die zweite Energiemaschine 56 kann direkt oder über eine oder mit einer zweiten oder durch eine zweite Übersetzungsstufe 92 und/oder eine weitere Welle mit der zweiten Eingangsseite 82 verbunden sein. Ausserdem ist eine Drehzahl und/oder eine Drehrichtung der Getriebeeinrichtung 50 einstellbar und/oder verstellbar und/oder ansteuerbar, bevorzugt eine Drehzahl und/oder eine Drehrichtung der ersten und/oder zweiten Ausgangsseite 84, 96, mit der zweiten Energiemaschine 56 einstellbar und/oder verstellbar und/oder ansteuerbar. Mit anderen Worten, eine Drehzahl und/oder eine Drehrichtung, und/oder insbesondere eine Rotation, der zweiten Energiemaschine 56 kann, insbesondere derart, einstellbar und/oder verstellbar und/oder ansteuerbar sein, dass eine Drehzahl und/oder eine Drehrichtung, und/oder insbesondere eine Rotation, der Getriebeeinrichtung 50, insbesondere der ersten und/oder zweiten Ausgangsseite 84, 96, der einstellbar und/oder verstellbar und/oder ansteuerbar ist.

Die Getriebeeinrichtung 50 kann als eine Umlaufgetriebestufe 94 ausgebildet sein. Die Getriebeeinrichtung 50, insbesondere die Umlaufgetriebestufe 94, kann als ein Planetenkoppelgetriebe 118 ausgebildet sein und/oder umfassen.

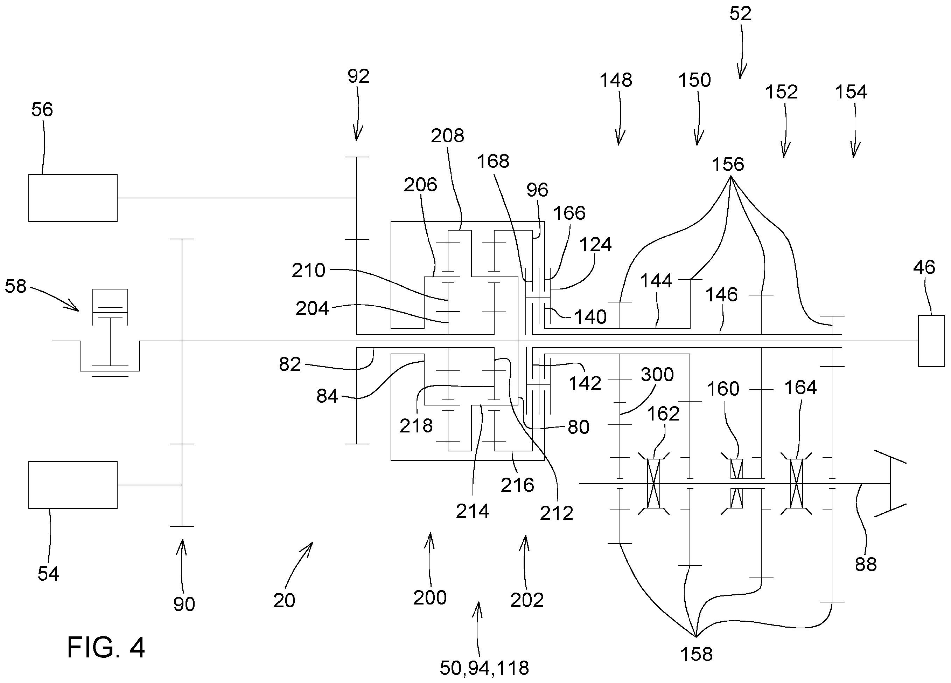

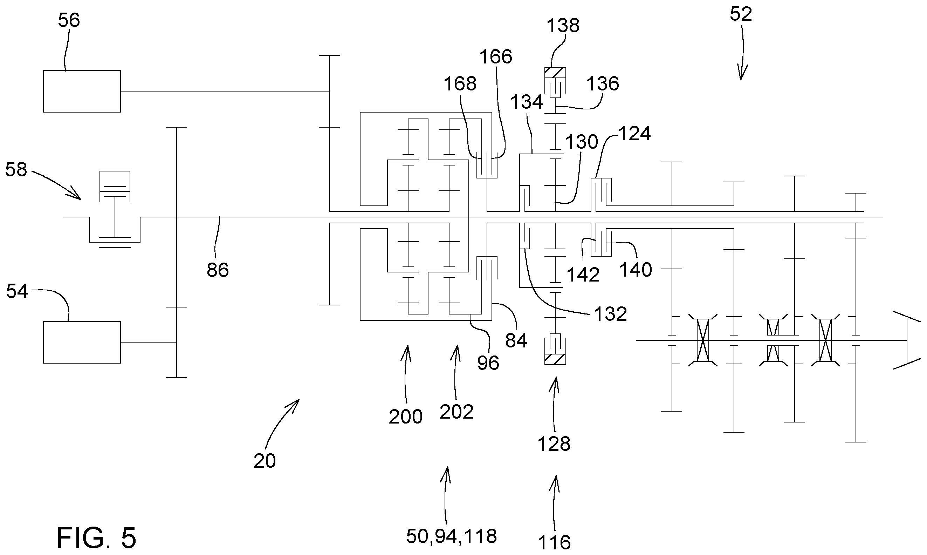

Die Getriebeeinrichtung 50, bevorzugt die Umlaufgetriebestufe 94, besonders bevorzugt das Planetenkoppelgetriebe 118, umfasst ein erstes und zweites Planetengetriebe 200, 202. Das erste und zweite Planetengetriebe 200, 202 sind miteinander gekoppelt sein (siehe Figur 4 und 5).

Die Getriebeeinrichtung 50, bevorzugt die Umlaufgetriebestufe 94, besonders bevorzugt das Planetenkoppelgetriebe 118 oder das erste und zweite Planetengetriebe 200, 202, können die erste und zweite Eingangsseite 80, 82 und die erste und zweite Ausgangsseite 84, 96 aufweisen. Ausserdem ist die Eingangswelle 86 mit dem ersten Leistungsausgang 46 verbunden.

Das Doppelkupplungsgetriebe 52 ist abtriebsseitig mit der Ausgangswelle 88 verbindbar oder verbunden. Die Ausgangswelle 88 kann ausserdem mit dem Fahrantrieb 70, bevorzugt dem Hinterachsantrieb 74, besonders bevorzugt dem ersten und/oder zweiten Differenzialgetriebe 30, 32 verbindbar oder verbunden sein. Im Speziellen kann die Ausgangswelle 88 mit einer Vorgelegewelle 98 verbindbar oder verbunden sein, insbesondere über eine oder durch eine dritte Übersetzungsstufe 100, beispielsweise eine weitere Stirnradstufe oder ein weiteres Zahnradpaar oder drei oder mehr Zahnräder oder ein weiteres Planetengetriebe oder ein sonstiges Getriebe. Ausserdem kann die Vorgelegewelle 98 mit dem Fahrantrieb 70, bevorzugt dem Vorderachsantrieb 72, besonders bevorzugt dem ersten Differenzialgetriebe 30 verbindbar oder verbunden sein. Die Vorgelegewelle 98 kann mit einer vierten oder über eine vierte Übersetzungsstufe 102, beispielsweise eine weitere Stirnradstufe oder ein weiteres Zahnradpaar oder drei oder mehr Zahnräder oder ein weiteres Planetengetriebe oder ein sonstiges Getriebe, und/oder einem weiteren Schaltelement 104 mit einer weiteren Welle 106 verbindbar oder verbunden sein. Die Antriebsanordnung 20 kann ausserdem den ersten Leistungsausgang 46 umfassen.

Die Antriebseinheit 58 und/oder die erste Energiemaschine 54 kann oder können mit dem ersten Leistungsausgang 46 verbindbar oder verbunden sein. Im Speziellen kann oder können die Antriebseinheit 58 und/oder die erste Energiemaschine 54 mit dem ersten Leistungsausgang 46 über die oder durch die Eingangswelle 86 verbindbar oder verbunden sein. Die Eingangswelle 86 kann beispielsweise mit einem weiteren Schaltelement (nicht gezeigt) mit dem ersten Leistungsausgang 46 verbindbar oder verbunden sein. Der erste Leistungsausgang 46 kann eine Zapfwelleneinheit 108 umfassen. Die Zapfwelleneinheit 108 kann ein Zapfwellengetriebe und/oder eine Zapfwelle umfassen. Die Zapfwelleneinheit 108, insbesondere das Zapfwellengetriebe, kann antriebsseitig mit der Eingangswelle 86 verbunden sein. Ausserdem kann die Zapfwelleneinheit 108, insbesondere das Zapfwellengetriebe, abtriebsseitig mit der Zapfwelle verbindbar oder verbunden sein. Die Getriebeeinrichtung 50 und/oder das Doppelkupplungsgetriebe 52 kann einen Durchgang, insbesondere einen zentralen Durchgang, für die Eingangswelle 86 aufweisen. Die Antriebsanordnung 20 kann ausserdem einen zweiten Leistungsausgang 48 umfassen. Die Antriebseinheit 58 und/oder die erste Energiemaschine 54 kann mit dem zweiten Leistungsausgang 48 verbindbar oder verbunden sein. Im Speziellen kann die Antriebseinheit 58 und/oder die erste Energiemaschine 54 mit dem zweiten Leistungsausgang 48 über eine weitere Welle und/oder die Eingangswelle 86 und/oder einem weiteren Schaltelement 110 verbindbar oder verbunden sein. Der zweite Leistungsausgang 48 kann eine weitere Zapfwelleneinheit 112 umfassen. Die weitere Zapfwelleneinheit 112 kann ein weiteres Zapfwellengetriebe und/oder eine weitere Zapfwelle umfassen. Die Figuren 2 bis 3 beschreiben den Drehmoment- und/oder Leistungsfluss der Antriebsanordnung 20 zur Ausgangswelle 88 schematisch.

Die Antriebsanordnung 20 kann weiter die Antriebseinheit 58 umfassen. Zwischen der Antriebseinheit 58 und der Getriebeeinrichtung 50 oder zwischen der Antriebseinheit 58 und der ersten Energiemaschine 54 kann eine Trennkupplung 114 angeordnet sein. Mit der Antriebseinheit 58 kann dadurch wahlweise eine Drehzahl und/oder ein Drehmoment und/oder eine Kraft in die Antriebsanordnung 20, insbesondere die Getriebeeinrichtung 50, einleitbar sein. Die Getriebeeinrichtung 50 kann im Drehmoment- und/oder Leistungsfluss vor dem Doppelkupplungsgetriebe 52 angeordnet sein.

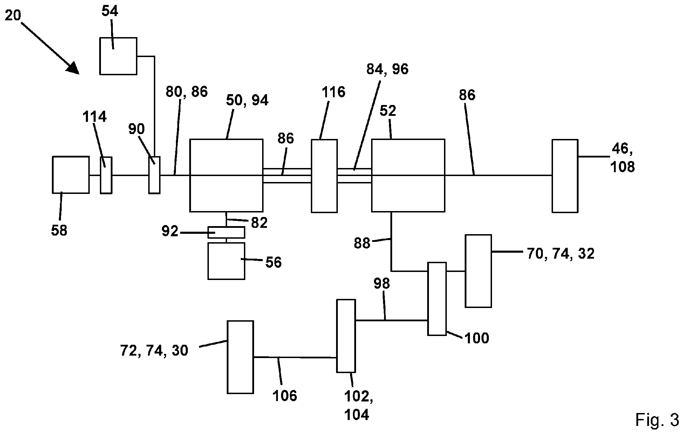

Figur 3 zeigt eine schematische Darstellung des zweiten Ausführungsbeispiels der erfindungsgemässen Antriebsanordnung 20. Die in Figur 3 gezeigte Antriebsanordnung 20 entspricht im Wesentlichen der in den Figuren 1 und 2 gezeigten Antriebsanordnung 20, sodass im Folgenden lediglich auf Details und/oder Unterschiede eingegangen wird. Die in Figur 1 dargestellte Arbeitsmaschine 10 kann die in Figur 3 dargestellte Antriebsanordnung 20 umfassen. Die Antriebsanordnung 20 umfasst ein Modul 116 zur Drehrichtungsumkehr. Mit dem Modul 116 zur Drehrichtungsumkehr kann eine Drehrichtung der ersten und/oder zweiten Ausgangsseite 84, 96 und/oder der Ausgangswelle 88 umkehrbar sein. Vorliegend ist das Modul 116 zur Drehrichtungsumkehr im Leistungsfluss zwischen der Getriebeeinrichtung 50 und dem Doppelkupplungsgetriebe 52 angeordnet. Alternativ kann das Modul 116 zur Drehrichtungsumkehr aber auch im Leistungsfluss zwischen der ersten und der zweiten Energiemaschine 54, 56 oder nach dem Doppelkupplungsgetriebe 52 angeordnet sein.

Figur 4 zeigt eine schematische Darstellung des dritten Ausführungsbeispiels der erfindungsgemässen Antriebsanordnung 20. Die in Figur 4 gezeigte Antriebsanordnung 20 entspricht im Wesentlichen der in den Figuren 1 bis 3 gezeigten Antriebsanordnung 20, sodass im Folgenden lediglich auf Details und/oder Unterschiede eingegangen wird. Die in Figur 1 dargestellte Arbeitsmaschine 10 kann die in Figur 4 dargestellte Antriebsanordnung 20 umfassen. Das Doppelkupplungsgetriebe 52 umfasst ein erstes und zweites Schaltelement 140, 142. Das erste Schaltelement 140 ist mit einer ersten Getriebeeingangswelle 144 verbindbar oder verbunden und das zweite Schaltelement 142 ist mit einer zweiten Getriebeeingangswelle 146 verbindbar oder verbunden. Das Doppelkupplungsgetriebe 52 umfasst vier Stirnradstufen 148, 150, 152, 154 mit jeweils einem drehfest auf der ersten oder zweiten Getriebeeingangswelle 144, 146 angeordneten Festrad 156 und jeweils einem auf der Ausgangswelle 88 drehbar angeordneten Schaltrad 158. Das Doppelkupplungsgetriebe 52 umfasst vier Stirnradstufen 148, 150, 152, 154 zur Einrichtung von Gangstufen. Im Speziellen umfasse eine erste Stirnradstufe 148 und eine zweite Stirnradstufe 150 jeweils das Festrad 156 an der ersten Getriebeeingangswelle 144 und jeweils das Schaltrad 158 an der Ausgangswelle 88 aufweisen. Eine dritte Stirnradstufe 152 und eine vierte Stirnradstufe 154 können jeweils das Festrad 156 an der zweiten Getriebeeingangswelle 146 und jeweils das Schaltrad 158 an der Ausgangswelle 88 aufweisen.

Das Doppelkupplungsgetriebe 52 umfasst ausserdem das erste Koppelelement 160. Das erste Koppelelement 160 ist an der Ausgangswelle 88 zwischen der zweiten und dritten Stirnradstufe 150, 152 angeordnet und auf der Ausgangswelle 88 gelagert. Die zwei Schalträder 158 der zweiten und dritten Stirnradstufe 150, 152 können mit dem ersten Koppelelement 160 drehfest verbunden werden, sodass die erste und zweite Getriebeeingangswelle 144, 146 in Abhängigkeit gebracht werden und eine Windungsgangstufe ausgebildet wird. Das zweite Koppelelement 162 kann zwischen der ersten und zweiten Stirnradstufe 148, 150 auf oder an der Ausgangswelle 88 angeordnet sein. Das dritte Koppelelement 164 kann zwischen der dritten und vierten Stirnradstufe 152, 154 auf oder an der Ausgangswelle 88 angeordnet sein. Das Schaltrad 158 der ersten Stirnradstufe 148 kann mit dem zweite Koppelelement 162 drehfest mit der Ausgangswelle 88 verbunden werden. Das Schaltrad 158 der vierten Stirnradstufe 154 kann mit dem dritten Koppelelement 164 drehfest mit der Ausgangswelle 88 verbunden werden.

Abtriebsseitig ist dem Doppelkupplungsgetriebe 52 die Ausgangswelle 88 zugeordnet. Das Doppelkupplungsgetriebe ist eingangsseitig mit der ersten Ausgangsseite 84 verbunden. Die erste und/oder zweite Getriebeeingangswelle 144, 146 sind als Hohlwellen ausgebildet. Die Eingangswelle 86 ist als Vollwelle ausgebildet. Die zweite Getriebeeingangswelle 146 ist in der ersten Getriebeeingangswelle 144 angeordnet und/oder gelagert, insbesondere drehbar angeordnet und/oder drehbar gelagert, und die Eingangswelle 86 in der zweiten Getriebeeingangswelle 146 angeordnet und/oder gelagert, insbesondere drehbar angeordnet und/oder drehbar gelagert.

Die Getriebeeinrichtung 50, bevorzugt die Umlaufgetriebestufe 94, besonders bevorzugt das Planetenkoppelgetriebe 118 oder das erste und zweite Planetengetriebe 200, 202, umfasst ein drittes und viertes Schaltelement 166, 168. Das dritte und vierte Schaltelement 166, 168 sind eingangsseitig mit der Getriebeeinrichtung 50, bevorzugt der Umlaufgetriebestufe 94, besonders bevorzugt besonders bevorzugt dem Planetenkoppelgetriebe 118 oder dem ersten und zweiten Planetengetriebe 200, 202, verbindbar oder verbunden. Das dritte und vierte Schaltelement 166, 168 sind als Kupplungen ausgebildet.

Das erste Planetengetriebe 200 umfasst eine erste Sonne 204 und einen ersten Planetenträger 206 und ein erstes Hohlrad 208 und einen oder mehrere, insbesondere drei, erste Planeten 210. Das zweite Planetengetriebe 202 umfasst eine zweite Sonne 212 und einen zweiten Planetenträger 214 und ein zweites Hohlrad 216 und einen oder mehrere, insbesondere drei, zweite Planeten 218. Das erste Hohlrad 208 ist mit dem zweiten Planetenträger 214 verbunden, insbesondere gekoppelt. Ausserdem sind die erste und zweite Sonne 204, 212 verbunden, insbesondere gekoppelt.

Die Antriebseinheit 58 und/oder die erste Energiemaschine 54 kann über die oder durch die Eingangswelle 86 mit dem zweiten Planetenträger 214 verbunden sein. Die Getriebeeinrichtung 50, bevorzugt die Umlaufgetriebestufe 94, besonders bevorzugt das Planetenkoppelgetriebe 118 oder das erste und zweite Planetengetriebe 200, 202, kann, insbesondere wahlweise, durch das dritte Schaltelement 166 mit dem ersten Planetenträger 206 oder durch das vierte Schaltelement 168 mit dem zweiten Hohlrad 216 verbindbar oder verbunden sein.

Die erste Eingangsseite 80 der Getriebeeinrichtung 50, bevorzugt der Umlaufgetriebestufe 94, besonders bevorzugt das Planetenkoppelgetriebe 118 oder das erste und zweite Planetengetriebe 200, 202, kann der zweite Planetenträger 214 sein. Alternativ oder zusätzlich kann die erste Eingangsseite 80 mit dem zweiten Planetenträger 214 verbindbar oder verbunden sein. Der zweite Planetenträger 214 kann mit der Eingangswelle 86 verbindbar oder verbunden sein. Der zweite Planetenträger 214 kann durch eine oder mit einer weiteren Welle mit der Eingangswelle 86 verbindbar oder verbunden sein.

Die zweite Eingangsseite 82 der Getriebeeinrichtung 50, bevorzugt der Umlaufgetriebestufe 94, besonders bevorzugt das Planetenkoppelgetriebe 118 oder das erste und zweite Planetengetriebe 200, 202, kann mit der zweiten Energiemaschine 56 verbindbar oder verbunden sein. Die zweite Energiemaschine 56 kann mit der ersten und zweiten Sonne 204, 212 verbindbar oder verbunden sein. Die zweite Eingangsseite 82 kann die erste und zweite Sonne 204, 212 sein. Alternativ oder zusätzlich kann die zweite Eingangsseite 82 mit der ersten und zweiten Sonne 204, 212 verbindbar oder verbunden sein. Die erste und zweite Sonne 204, 212 kann durch eine oder mit einer Welle und/oder die zweite Übersetzungsstufe 92 mit der zweiten Energiemaschine 56 verbindbar oder verbunden sein.

Die erste Ausgangsseite 84 der Getriebeeinrichtung 50, bevorzugt der Umlaufgetriebestufe 94, besonders bevorzugt das Planetenkoppelgetriebe 118 oder das erste und zweite Planetengetriebe 200, 202, kann der erste Planetenträger 206 sein. Alternativ oder zusätzlich kann die erste Ausgangsseite 84 mit dem ersten Planetenträger 206 verbindbar oder verbunden sein. Der erste Planetenträger 206 kann mit dem Doppelkupplungsgetriebe 52 verbindbar oder verbunden sein, bevorzugt der dritten Eingangsseite 124 des Doppelkupplungsgetriebes 52 oder einer Eingangsseite des ersten und zweiten Schaltelements 140, 142 verbunden sein. Der erste Planetenträger 206 kann mit dem Doppelkupplungsgetriebe 52, insbesondere der dritten Eingangsseite 124 oder einer Eingangsseite des ersten und zweiten Schaltelements 140, 142, durch eine oder mit einer Welle verbindbar oder verbunden sein. Der erste Planetenträger 206 kann durch oder über das dritte Schaltelement 166 mit dem Doppelkupplungsgetriebe 52, insbesondere der dritten Eingangsseite 124 oder einer Eingangsseite des ersten und zweiten Schaltelements 140, 142 verbindbar oder verbunden. Das dritte Schaltelement 166 ist eingangsseitig mit dem ersten Planetenträger 206 verbunden und ausgangsseitig mit dem Doppelkupplungsgetriebe 52, insbesondere der dritten Eingangsseite 124 oder einer Eingangsseite des ersten und zweiten Schaltelements 140, 142 verbindbar oder verbunden.

Die zweite Ausgangsseite 96 der Getriebeeinrichtung 50, bevorzugt der Umlaufgetriebestufe 94, besonders bevorzugt das Planetenkoppelgetriebe 118 oder das erste und zweite Planetengetriebe 200, 202, kann das zweite Hohlrad 216 sein. Alternativ oder zusätzlich kann die zweite Ausgangsseite 96 mit dem zweiten Hohlrad 216 verbindbar oder verbunden sein. Das zweite Hohlrad 216 kann mit dem Doppelkupplungsgetriebe 52 verbunden sein, bevorzugt der dritten Eingangsseite 124 des Doppelkupplungsgetriebes 52 oder einer Eingangsseite des ersten und zweiten Schaltelements 140, 142 verbunden sein. Das zweite Hohlrad 216 kann mit dem Doppelkupplungsgetriebe 52, insbesondere der dritten Eingangsseite 124 oder einer Eingangsseite des ersten und zweiten Schaltelements 140, 142, durch eine oder mit einer Welle verbindbar oder verbunden sein. Das zweite Hohlrad 216 kann durch oder über das vierte Schaltelement 168 mit dem Doppelkupplungsgetriebe 52, insbesondere der dritten Eingangsseite 124 oder einer Eingangsseite des ersten und zweiten Schaltelements 140, 142 verbindbar oder verbunden. Das vierte Schaltelement 168 ist eingangsseitig mit dem zweiten Hohlrad 216 verbunden und ausgangsseitig mit dem Doppelkupplungsgetriebe 52, insbesondere der dritten Eingangsseite 124 oder einer Eingangsseite des ersten und zweiten Schaltelements 140, 142 verbindbar oder verbunden.

Ein Rücklaufrad 300 ist zwischen der ersten oder zweiten Getriebeeingangswelle 144, 146 und der Ausgangswelle 88 des Doppelkupplungsgetriebes angeordnet, insbesondere zwischengeschaltet. Das Rücklaufrad 300 kann zwischen einem Festrad 156 und Schaltrad 158 einer der Stirnradstufen 148, 150, 152, 154 angeordnet sein. In Figur 4 ist das Rücklaufrad 300 in der ersten Stirnradstufe 148 angeordnet, insbesondere zwischen dem Festrad 156 und dem Schaltrad 158 der ersten Stirnradstufe 148. Dadurch können mit dem Doppelkupplungsgetriebe 52 vorteilhafterweise vier Vorwärtsgänge (davon ein Windungsgang) und zwei Rückwärtsgänge (davon ein Windungsgang) realisiert werden.

Figur 5 zeigt eine schematische Darstellung des vierten Ausführungsbeispiels der erfindungsgemässen Antriebsanordnung 20. Die in Figur 5 gezeigte Antriebsanordnung 20 entspricht im Wesentlichen der in den Figuren 1 bis 4 gezeigten Antriebsanordnung 20, sodass im Folgenden lediglich auf Details und/oder Unterschiede eingegangen wird. Die in Figur 1 dargestellte Arbeitsmaschine 10 kann die in Figur 5 dargestellte Antriebsanordnung 20 umfassen. Die erste und/oder zweite Ausgangsseite 84, 96 der Getriebeeinrichtung 50, bevorzugt der Umlaufgetriebestufe 94, besonders bevorzugt des Planetenkoppelgetriebe 118 oder des ersten und zweiten Planetengetriebes 200, 202, ist über das Modul 116 zur Drehrichtungsumkehr mit dem Doppelkupplungsgetriebe 52 verbindbar oder verbunden, insbesondere der dritten Eingangsseite 124 oder einer Eingangsseite des ersten und zweiten Schaltelements 140, 142 des Doppelkupplungsgetriebes 52 verbindbar oder verbunden. Die erste Ausgangsseite 84 kann über das oder durch das dritte Schaltelement 166 mit dem Modul 116 zur Drehrichtungsumkehr verbindbar oder verbunden sein. Die zweite Ausgangsseite 96 kann über das oder durch das vierte Schaltelement 168 mit dem Modul 116 zur Drehrichtungsumkehr verbindbar oder verbunden sein. Im Speziellen können die erste und/oder zweite Ausgangsseite 84 mit einer Kupplungseinrichtung 132 des Moduls 116 zur Drehrichtungsumkehr verbindbar oder verbunden sein. Die erste Ausgangsseite 84 kann über das oder durch das dritte Schaltelement 166 mit der Kupplungseinrichtung 132 verbindbar oder verbunden sein. Die zweite Ausgangsseite 96 kann über das oder durch das vierte Schaltelement 168 mit der Kupplungseinrichtung 132 verbindbar oder verbunden sein. Das dritte und vierte Schaltelement 166, 168 können mit der Kupplungseinrichtung 132 verbindbar oder verbunden sein, insbesondere über eine oder mit einer gemeinsamen Welle.

Das Modul 116 zur Drehrichtungsumkehr ist als ein drittes Planetengetriebe 128 ausgebildet. Die Drehrichtungsumkehr kann am Ausgang bzw. Abtrieb oder abtriebsseitig des dritten Planetengetriebes 128, vorliegend einer Sonne, insbesondere der dritten Sonne 130, des zweiten Planetengetriebes 128, realisiert werden. Das Doppelkupplungsgetriebe 52 ist mit der dritten Sonne 130, bevorzugt eingangsseitig, besonders bevorzugt der dritten Eingangsseite 124 des Doppelkupplungsgetriebes 52 oder einer Eingangsseite des ersten und zweiten Schaltelements 140, 142, verbindbar oder verbunden, beispielsweise durch oder mit einer weiteren Welle. Die Kupplungseinrichtung 132 ist ausgangsseitig mit einem dritten Planetenträger 134 verbunden. Die Kupplungseinrichtung 132 ist ausgangsseitig mit der dritten Sonne 130 verbindbar oder verbunden. Ein drittes Hohlrad 136 des dritten Planetengetriebes 128 ist mit einer Bremse 138 verbindbar. Das Doppelkupplungsgetriebe 52 umfasst kein Rücklaufrad 300.

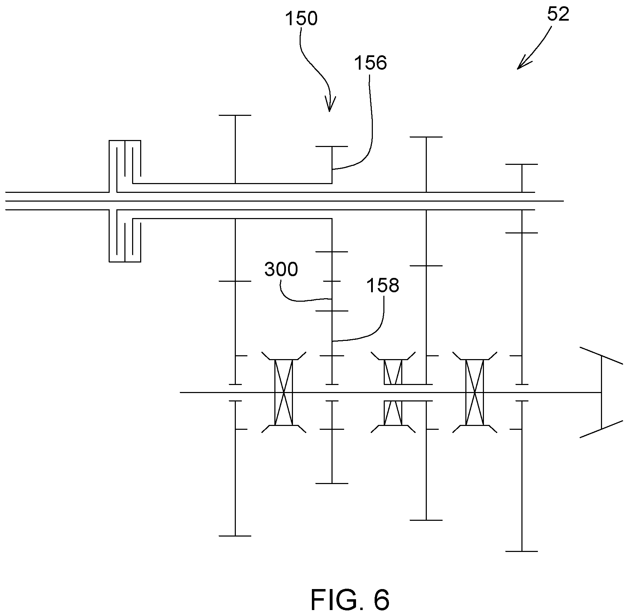

Figur 6 zeigt eine schematische Darstellung eines weiteren Ausführungsbeispiels des Doppelkupplungsgetriebes 52. Das in Figur 6 gezeigte Doppelkupplungsgetriebe 52 entspricht im Wesentlichen dem in den Figuren 1 bis 5 gezeigten Doppelkupplungsgetriebe 52, sodass im Folgenden lediglich auf Details und/oder Unterschiede eingegangen wird. Die in den Figuren 1 bis 5 dargestellte Antriebsanordnung 20 kann das in Figur 6 dargestellte Doppelkupplungsgetriebe 52 umfassen. In Figur 6 ist das Rücklaufrad 300 in der zweiten Stirnradstufe 150 angeordnet, insbesondere zwischen dem Festrad 156 und dem Schaltrad 158 der zweiten Stirnradstufe 150. Dadurch können mit dem Doppelkupplungsgetriebe 52 vorteilhafterweise drei Vorwärtsgänge als einstufige Gänge und drei Rückwärtsgänge, von denen zwei als Windungsgänge sind, realisiert werden.

## Patentansprüche

1. Antriebsanordnung (20) für eine Arbeitsmaschine (10), umfassend:
i. eine Getriebeeinrichtung (50) mit einer ersten und zweiten Eingangsseite (80, 82) und einer ersten und zweiten Ausgangsseite (84, 96),
ii. und ein Doppelkupplungsgetriebe (52), wobei mindestens ein Gang als Windungsgang ausgeführt ist, und das Doppelkupplungsgetriebe (52) mit der Getriebeeinrichtung (50) verbindbar oder verbunden ist,
iii. und eine Eingangswelle (86),
iv. und eine Ausgangswelle (88),
v. und eine erste Energiemaschine (54), wobei die erste Energiemaschine (54) mit der Eingangswelle (86) verbindbar oder verbunden ist,
vi. und eine zweite Energiemaschine (56), wobei die zweite Energiemaschine (56) mit der zweiten Eingangsseite (82) verbunden ist,
**dadurch gekennzeichnet, dass**
vii. eine Drehzahl und/oder eine Drehrichtung der Getriebeeinrichtung (50) einstellbar und/oder verstellbar und/oder ansteuerbar ist, bevorzugt eine Drehzahl und/oder eine Drehrichtung der ersten und/oder zweiten Ausgangsseite (84, 96) der Getriebeeinrichtung (50) mit der zweiten Energiemaschine (56) einstellbar und/oder verstellbar und/oder ansteuerbar ist.

2. Antriebsanordnung nach Anspruch 1, **dadurch gekennzeichnet, dass** die Antriebsanordnung (20) eine Antriebseinheit (58) umfasst, und die Antriebseinheit (58) mit der Eingangswelle (86) verbindbar oder verbunden ist.

3. Antriebsanordnung nach mindestens einem der vorangehenden Ansprüche, **dadurch gekennzeichnet, dass** das Doppelkupplungsgetriebe (52) ein erstes und zweites Schaltelement (140, 142) umfasst, und das erste Schaltelement (140) mit einer ersten Getriebeeingangswelle (144) verbunden ist und das zweite Schaltelement (142) mit einer zweiten Getriebeeingangswelle (146) verbunden ist, und das Doppelkupplungsgetriebe (52) mehrere Stirnradstufen (148, 150, 152, 154) mit jeweils einem drehfest auf der ersten oder zweiten Getriebeeingangswelle (144, 146) angeordneten Festrad (156) und jeweils einem auf der Ausgangswelle (88) drehbar angeordneten Schaltrad (158) umfasst.

4. Antriebsanordnung nach mindestens einem der vorangehenden Ansprüche, **dadurch gekennzeichnet, dass** eine der Stirnradstufen (148, 150, 152, 154) ein Rücklaufrad (300) umfasst.

5. Antriebsanordnung nach mindestens einem der vorangehenden Ansprüche, **dadurch gekennzeichnet, dass** die Getriebeeinrichtung (50) als eine Umlaufgetriebestufe (94) ausgebildet ist.

6. Antriebsanordnung nach mindestens einem der vorangehenden Ansprüche, **dadurch gekennzeichnet, dass** die Antriebsanordnung (20), bevorzugt die Getriebeeinrichtung (50), besonders bevorzugt eine Umlaufgetriebestufe (94), ein drittes und viertes Schaltelement (166, 168) umfasst, und das dritte und vierte Schaltelement (166, 168) ausgangsseitig mit dem Doppelkupplungsgetriebe (52) verbindbar oder verbunden ist.

7. Antriebsanordnung nach mindestens einem der vorangehenden Ansprüche, **dadurch gekennzeichnet, dass** die Antriebsanordnung (20) eine Leistungselektronik (60) umfasst, mit der insbesondere elektrische Leistung zwischen der ersten Energiemaschine (54) und der zweiten Energiemaschine (56) übertragbar ist.

8. Antriebsanordnung nach mindestens einem der vorangehenden Ansprüche, **dadurch gekennzeichnet, dass** wobei die Antriebsanordnung (20) ein Modul (116) zur Drehrichtungsumkehr umfasst.

9. Antriebsanordnung nach Anspruch 8, **dadurch gekennzeichnet, dass** das Modul (116) zur Drehrichtungsumkehr im Leistungsfluss zwischen der ersten und der zweiten Energiemaschine (54, 56) angeordnet ist oder im Leistungsfluss nach dem Doppelkupplungsgetriebe (52) angeordnet ist oder im Leistungsfluss zwischen der Getriebeeinrichtung (50) und dem Doppelkupplungsgetriebe (52) angeordnet ist.

10. Antriebsanordnung nach mindestens einem der vorangehenden Ansprüche, **dadurch gekennzeichnet, dass** eine Trennkupplung (114) zwischen der Antriebseinheit (58) und der Getriebeeinrichtung (50) oder zwischen der Antriebseinheit (58) und der ersten Energiemaschine (54) angeordnet ist.

11. Antriebsanordnung nach mindestens einem der vorangehenden Ansprüche, **dadurch gekennzeichnet, dass** die Antriebsanordnung (20) eine Steuereinheit (42) umfasst, wobei die Antriebsanordnung (20) mit der Steuereinheit (42) betreibbar ist.

12. Antriebsanordnung nach mindestens einem der vorangehenden Ansprüche, **dadurch gekennzeichnet, dass** die Eingangswelle (86) mit einem ersten Leistungsausgang (46) verbunden ist.

13. Arbeitsmaschine (10), umfassend eine Antriebsanordnung (20) nach einem der Ansprüche 1 bis 12.
